(19) Europäisches Patentamt
European Patent Office
Office européen des brevets

(11) **EP 4 746 413 A1**

(12) **EUROPEAN PATENT APPLICATION**
published in accordance with Art. 153(4) EPC

(43) Date of publication:
**20.05.2026 Bulletin 2026/21**

(21) Application number: **24838695.5**

(22) Date of filing: **05.07.2024**

(51) International Patent Classification (IPC):
**H04N 19/597** (2014.01)

(52) Cooperative Patent Classification (CPC):
**H04N 19/169; H04N 19/30; H04N 19/503;
H04N 19/51; H04N 19/597; H04N 19/96**

(86) International application number:
**PCT/CN2024/103742**

(87) International publication number:
**WO 2025/011442 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 CN 202310853877**

(71) Applicant: **Vivo Mobile Communication Co., Ltd.
Dongguan, Guangdong 523863 (CN)**

(72) Inventors:
• **ZHANG, Wei**
**Dongguan, Guangdong 523863 (CN)**
• **HUANG, Ren**
**Dongguan, Guangdong 523863 (CN)**
• **YANG, Fuzheng**
**Dongguan, Guangdong 523863 (CN)**
• **LV, Zhuoyi**
**Dongguan, Guangdong 523863 (CN)**

(74) Representative: **Conti, Marco
Bugnion S.p.A.
Via di Corticella, 87
40128 Bologna (IT)**

(54) **POINT CLOUD ENCODING METHOD AND APPARATUS, POINT CLOUD DECODING METHOD AND APPARATUS, AND ELECTRONIC DEVICE**

(57)   This application discloses a point cloud encoding method and apparatus, a point cloud decoding method and apparatus, and an electronic device, and belongs to the field of encoding and decoding technologies. The point cloud encoding method in an embodiment of this application includes: performing point cloud partitioning processing on a target point cloud frame of a to-be-encoded point cloud to obtain a plurality of point cloud slices (101); performing, in a case that it is determined that a target point cloud slice satisfies a first motion compensation condition, motion compensation on a reference point cloud slice corresponding to the target point cloud slice, to obtain a compensated reference point cloud slice (102), where the target point cloud slice is a point cloud slice among the plurality of point cloud slices; and performing inter-frame prediction encoding on the target point cloud slice based on the compensated reference point cloud slice (103).

```
              ┌─────────────┐
              │    Start    │
              └──────┬──────┘
                     ▼
┌──────────────────────────────────────────────┐
│  Perform point cloud partitioning processing  │──101
│  on a target point cloud frame of a to-be-     │
│  encoded point cloud to obtain a plurality of  │
│  point cloud slices                            │
└──────────────────┬─────────────────────────────┘
                     ▼
┌──────────────────────────────────────────────┐
│  Perform, in a case that it is determined      │──102
│  that a target point cloud slice satisfies a   │
│  first motion compensation condition, motion   │
│  compensation on a reference point cloud slice │
│  corresponding to the target point cloud       │
│  slice, to obtain a compensated reference      │
│  point cloud slice                             │
└──────────────────┬─────────────────────────────┘
                     ▼
┌──────────────────────────────────────────────┐
│  Perform inter-frame prediction encoding on    │──103
│  the target point cloud slice based on the     │
│  compensated reference point cloud slice       │
└──────────────────┬─────────────────────────────┘
                     ▼
              ┌─────────────┐
              │     End     │
              └─────────────┘
```

FIG. 13

EP 4 746 413 A1

**Description**

**CROSS-REFERENCE TO RELATED APPLICATIONS**

This application claims priority to Chinese Patent Application No. 202310853877.4, filed in China on July 12, 2023, which is incorporated by reference in its entirety.

**TECHNICAL FIELD**

This application belongs to the field of encoding and decoding technologies, and in particular, to a point cloud encoding method and apparatus, a point cloud decoding method and apparatus, and an electronic device.

**BACKGROUND**

A point cloud is a representation form of a three-dimensional object or scene, consisting of a discrete set of points irregularly distributed in space that express a spatial structure and surface attributes of the three-dimensional object or scene. To accurately reflect information in space, the quantity of discrete points required is quite large. To reduce bandwidth occupied by point cloud data during storage and transmission, encoding and compression processing of the point cloud data is necessary. The point cloud data typically consists of geometric information (e.g., three-dimensional coordinates (x, y, z)) describing a position and attribute information (e.g., color (R, G, B)) of the position or reflectivity. In the process of point cloud encoding and compression, the encoding of geometric information and attribute information is performed separately.

In the related art, during the inter-frame prediction encoding of the point cloud, if motion compensation is enabled for a to-be-encoded point cloud frame, motion compensation needs to be performed on all point cloud slices of the to-be-encoded point cloud frame, resulting in low efficiency of point cloud encoding and decoding.

**SUMMARY**

Embodiments of this application provide a point cloud encoding method and apparatus, a point cloud decoding method and apparatus, and an electronic device, to resolve a problem of low efficiency of point cloud encoding and decoding.

According to a first aspect, a point cloud encoding method is provided. The method is performed by an encoder side and includes:

performing point cloud partitioning processing on a target point cloud frame of a to-be-encoded point cloud to obtain a plurality of point cloud slices;

performing, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and

performing inter-frame prediction encoding on the target point cloud slice based on the compensated reference point cloud slice.

According to a second aspect, a point cloud decoding method is provided. The method is performed by a decoder side and includes:

performing point cloud partitioning processing on a target point cloud frame of a to-be-decoded point cloud to obtain a plurality of point cloud slices;

performing, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices; and

performing inter-frame prediction decoding on the target point cloud slice based on the compensated reference point cloud slice.

According to a third aspect, a point cloud encoding apparatus is provided. The apparatus includes:

a partitioning module, configured to perform point cloud partitioning processing on a target point cloud frame of a to-be-encoded point cloud to obtain a plurality of point cloud slices;

a first compensation module, configured to perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and

a first encoding module, configured to perform inter-frame prediction encoding on the target point cloud slice based on the compensated reference point cloud slice.

According to a fourth aspect, a point cloud decoding apparatus is provided. The apparatus includes:

a partitioning module, configured to perform point cloud partitioning processing on a target point cloud frame of a to-be-decoded point cloud to obtain a plurality of point cloud slices;

a first compensation module, configured to perform, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices; and

a first decoding module, configured to perform inter-frame prediction decoding on the target point cloud slice based on the compensated reference point cloud slice.

According to a fifth aspect, an electronic device is provided. The terminal includes a processor, a memory, and a program or instruction stored in the memory and executable on the processor. The program or instruction, when executed by the processor, implements the steps of the method according to the first aspect. Alternatively, the program or instruction, when executed by the processor, implements the steps of the method according to the second aspect.

According to a sixth aspect, an electronic device is provided, including a processor and a communication interface. The processor is configured to: perform point cloud partitioning processing on a target point cloud frame of a to-be-encoded point cloud to obtain a plurality of point cloud slices; perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and perform inter-frame prediction encoding on the target point cloud slice based on the compensated reference point cloud slice.

According to a seventh aspect, an electronic device is provided, including a processor and a communication interface. The processor is configured to: perform performing point cloud partitioning processing on a target point cloud frame of a to-be-decoded point cloud to obtain a plurality of point cloud slices; perform, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices; and perform inter-frame prediction decoding on the target point cloud slice based on the compensated reference point cloud slice.

According to an eighth aspect, a readable storage medium is provided. The readable storage medium has a program or instruction stored therein. The program or instruction, when executed by a processor, implements the steps of the point cloud encoding method according to the first aspect. Alternatively, the program or instruction, when executed by a processor, implements the steps of the point cloud decoding method according to the second aspect.

According to a ninth aspect, a chip is provided. The chip includes a processor and a communication interface. The communication interface is coupled to the processor. The processor is configured to execute a program or instruction, to implement the steps of the method according to the first aspect or implement the steps of the method according to the second aspect.

According to a tenth aspect, a computer program/program product is provided. The computer program/program product is stored in a non-volatile storage medium. The program/program product is executed by at least one processor, to implement the steps of the method according to the first aspect, or implement the steps of the method according to the second aspect.

In the embodiments of this application, point cloud partitioning processing is performed on a target point cloud frame of a to-be-encoded point cloud to obtain a plurality of point cloud slices. In a case that it is determined that a target point cloud slice satisfies a first motion compensation condition, motion compensation is performed on a reference point cloud slice corresponding to the target point cloud slice, to obtain a compensated reference point cloud slice, where the target point cloud slice is a point cloud slice among the plurality of point cloud slices. Inter-frame prediction encoding is performed on the target point cloud slice based on the compensated reference point cloud slice. In this way, in a case that it is determined that the target point cloud slice satisfies the first motion compensation condition, motion compensation is performed on the reference point cloud slice corresponding to the target point cloud slice, so that whether to perform motion compensation can be determined for each point cloud slice, and encoding redundancy caused by determining motion compensation at a point cloud frame level can be reduced, thereby improving efficiency of point cloud encoding and decoding.

## BRIEF DESCRIPTION OF THE DRAWINGS

FIG. 1 is a framework diagram of a G-PCC encoder in the related art;
FIG. 2 is a framework diagram of a G-PCC decoder in the related art;
FIG. 3 is a schematic diagram of a point cloud frame according to an embodiment of this application;
FIG. 4 is a schematic diagram of a correspondence between nodes in a reference frame and a current frame in the related art;
FIG. 5 is a schematic diagram of inter-frame prediction for geometry encoding based on an octree in the related art;
FIG. 6 is a schematic diagram of global motion compensation in the related art;
FIG. 7 is a schematic diagram of partitioning of different height regions of a point cloud bounding box in the related art;
FIG. 8 is a schematic diagram of local motion compensation in the related art;
FIG. 9 is a schematic diagram of local motion compensation at an encoder side in the related art;
FIG. 10 is a schematic diagram of a search window between a reference frame and a current frame in the related art;
FIG. 11 is a schematic diagram of LPU splitting in the related art;
FIG. 12 is a schematic diagram of local motion compensation at a decoder side in the related art;
FIG. 13 is a schematic flowchart of a point cloud encoding method according to an embodiment of this application;
FIG. 14 is a schematic flowchart of a point cloud decoding method according to an embodiment of this application;
FIG. 15 is a schematic structural diagram of a point cloud encoding apparatus according to an embodiment of this application;
FIG. 16 is a schematic structural diagram of a point cloud decoding apparatus according to an embodiment of this application;
FIG. 17 is a structural diagram of an electronic device according to an embodiment of this application; and
FIG. 18 is a structural diagram of a terminal according to an embodiment of this application.

## DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application fall within the protection scope of this application.

In this application, the terms "first" and "second" are used for distinguishing similar objects, but are not used for describing a specific sequence or order. It should be understood that the terms used in this way may be transposed where appropriate, so that the embodiments of this application can be implemented in a sequence other than those illustrated or described herein. In addition, objects defined by "first" and "second" are generally of the same class and do not limit the number of objects. For example, one or more first objects may be arranged. In addition, "or" in this application indicates at least one of connected objects. For example, "A or B" covers three solutions: solution 1 in which A is included but B is not included; solution 2 in which B is included but A is not included; and solution 3 in which both A and B are included. The character "/" in this specification generally indicates an "or" relationship between the associated objects.

The term "indication" in this application may be either a direct indication (or an explicit indication) or an indirect indication (or an implicit indication). The direct indication may be understood as that a transmitter clearly informs a receiver of specific information, operations to be performed, request results, or the like in the transmitted indication. The indirect indication may be understood as that the receiver determines the corresponding information according to the indication transmitted by the transmitter, or makes a judgment and determines operations to be performed, request results, or the like according to the judgment result.

Encoder and decoder sides corresponding to encoding and decoding methods in embodiments of this application may be a terminal. The terminal may alternatively be referred to as a terminal device or user equipment (User Equipment, UE). The terminal may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a notebook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device) or vehicle user equipment (Vehicle User Equipment, VUE), or pedestrian user equipment (Pedestrian User Equipment, PUE). The wearable device includes: a smart watch, a smart bracelet, a smart earphone, smart glasses, and the like. It should be noted that a specific type of the terminal is not limited in the embodiments of this application.

For ease of understanding, some contents in the embodiments of this application are described below.

## 1. Geometry Encoding and Decoding

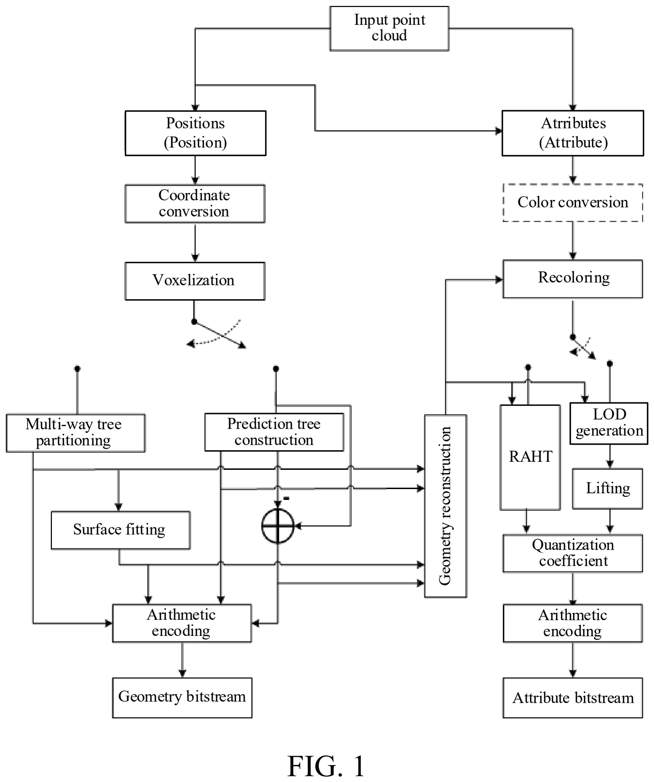

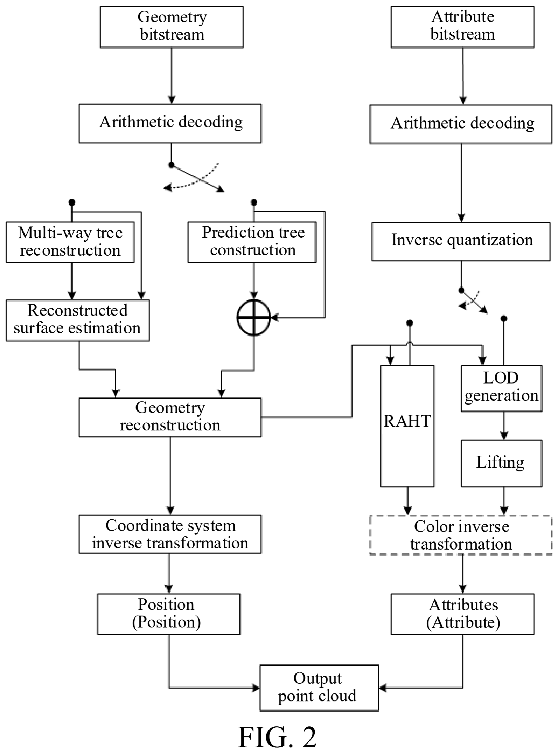

As shown in FIG. 1 and FIG. 2, in a framework of a geometry point cloud compression (Geometry Point Cloud Compression, G-PCC) encoder, geometrical information and attribute information are encoded separately. Currently, G-PCC geometry encoding and decoding may be classified into octree-based geometry encoding and decoding, triangle soup (Triangle Soup, Trisoup)-based geometry encoding and decoding, and prediction tree-based geometry encoding and decoding.

### 1.1 Octree-based Geometry Encoding and Decoding

Encoding: first, coordinate conversion is performed on the geometrical information, so that all point clouds are included in one bounding box (bounding box). Then, quantization (scaling the point cloud), rounding, and repeated point removal are performed. Due to quantization rounding, geometrical information of some points is the same. To be specific, some points are repeated points. Whether to remove the repeated points is determined according to parameters. Next, tree partitioning (octree/quadtree/binary tree) is continuously performed on the bounding box according to an order of traversing in the breadth first, an eight-occupancy is used for indicating whether each sub-node occupies a point, the occupancy obtained through splitting is encoded, and a non-null (including a point in a point cloud) sub-node is further split, until a leaf node obtained through splitting is a unit cube whose size is 1x1x1. Next, a quantity of points included in the leaf node is encoded. Finally, a geometrical multi-way tree is encoded, to generate a binary bitstream.

Decoding: A decoder side continuously obtains an occupancy of each node according to an order of traversing in the breadth first, continuously splits nodes in sequence, stops splitting until a unit cube of 1x1x1 is obtained through splitting, obtains a point quantity included in each leaf node through parsing, and finally obtains geometrical reconstructed point cloud information through recovery.

### 1.2 Trisoup-based Geometry Encoding and Decoding

Encoding: An octree is first partitioned. Different from encoding based on geometrical information of an octree structure, in this method, the point cloud does not need to be partitioned into a bottom-layer leaf node having a side length of 1x1x1 in a layer-by-layer manner, but splits a leaf node having a specified side length. Then, surface information formed by voxels in a node is represented by using a series of triangle meshes (triangle mesh). In the GPCC, a parameter trisoup node size (trisoup node size) is used for representing a size of a block (block) at which a triangular patch is located. When the trisoup node size is greater than 0, a voxel set in a node is represented by using a geometrical patch, and at most twelve intersections generated by the geometrical patch and twelve edges of the block are referred to as vertexes (vertex). Vertex coordinates of each block are encoded sequentially, to generate a binary bitstream.

Decoding: To decode geometrical coordinates of a point cloud from a triangular patch of a node, whether each voxel in a cube of the node is intersected with the triangular patch needs to be checked. This technology is referred to as triangle rasterization. An intersection check is performed by using 6 unit vectors (0, 0, 1), (0, 0, 1), (0, 0, 1), (0, 0, 1), (0, 0, 1), and (0, 0, 1), to check whether each unit vector is intersected with a triangular patch. If each unit vector is intersected with the triangular patch, an intersection point is calculated and a decoded cube is output. The quantity of generated points in the decoder is determined by a mesh distance d.

### 1.3 Prediction Tree-based Geometry Encoding and Decoding

Encoding: The input point clouds are first sorted. Currently used sorting methods include random, Morton, azimuth, and radial distance. A prediction tree structure is established at an encoder side by using two different manners, including: a K-dimensional tree (k-dimensional Tree, KQ-Tree) (i.e., a high-delay slow-speed mode) and Lidar calibration information. Each point is partitioned to different lasers (Laser) and a prediction structure is established according to the different Lasers (i.e., a low-delay fast-speed mode). Next, each node in the prediction tree is traversed based on the structure of the prediction tree. Geometrical location information of the node is predicted by selecting different prediction modes, to obtain a prediction residual, and the geometrical prediction residual is quantized by using a quantization parameter. Finally, the prediction residual of the position information of the prediction tree node, the prediction tree structure, the quantization parameter, and the like are encoded through continuous iteration, to generate a binary bitstream.

Decoding: The decoder side continuously parses the bitstream to reconstruct the prediction tree structure, then obtains geometrical location prediction residual information and the quantization parameter of each prediction node through parsing, and performs dequantization on the prediction residual, to recover reconstructed geometrical location information of each node, thereby finally completing geometrical reconstruction at the decoder side.

2. Inter-Frame Prediction

Entropy encoding is widely applied to G-PCC, and is an encoding or decoding method in which a probability model is adaptively selected based on a local context. When the encoding local context changes, a state of an encoder/decoder engine also changes. A corresponding encoding process is performed according to different context, so that the probability model becomes more effective during encoding.

Objectives of Inter-Frame Prediction:

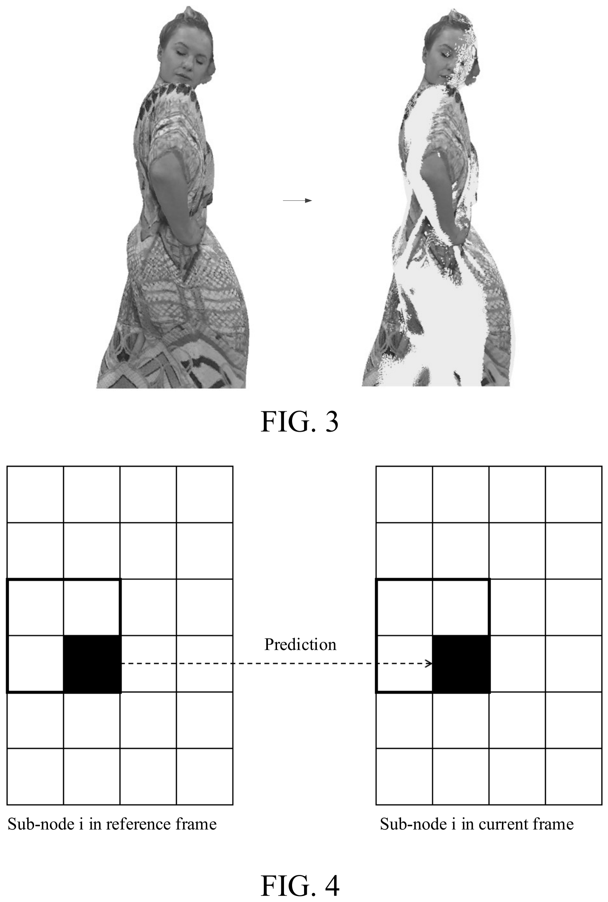

Because a dynamic point cloud may be highly correlated to space in time, as shown in FIG. 3, a point cloud of an $F^{th}$ frame is shown on the left, and a point cloud of an $(F+1)^{th}$ frame is shown on the right, a white-filled part on a person is a similar part in the two frames of point cloud, and many similar parts may be seen in each point cloud. Therefore, redundant information of a plurality of frames of point cloud sequences in a time domain may be eliminated by using inter-frame prediction.

When an occupancy obtained by partitioning the multi-way tree is encoded, the occupancy is encoded by using inter-frame prediction information as a context. The inter-frame prediction process is located in a multi-way tree geometry encoding process. Specifically, multi-way tree partitioning is also performed on a reference frame according to the foregoing description. FIG. 4 is shown in a two-dimensional form. A node having the same spatial location as that of a current node in a current frame according to a Morton code order in a reference frame is set as $node_{ref}$. If there are points in sub-node i (there are eight sub-nodes, where a value of i is 0 to 7) obtained by splitting $node_{ref}$, predOccupancy[i] is 1. To be specific, the current frame node i is predicted to be occupancy. If a quantity of points in sub-node i obtained by splitting $node_{ref}$ is greater than threshold th, predOccupancyStrong[i] is 1. To be specific, the current frame node i is predicted to be strong occupancy (there is a high possibility that the current frame sub-node i is occupancy). The obtained predOccupancy [i] and predOccupancyStrong[i] are used as context information for encoding whether the current frame sub-node i is occupancy.

Utilization of Inter-Frame Information:

The predicted node occupancy may be directly obtained from a reference frame point cloud, or may be obtained from a compensation point cloud, depending on whether the current node has performed motion compensation.

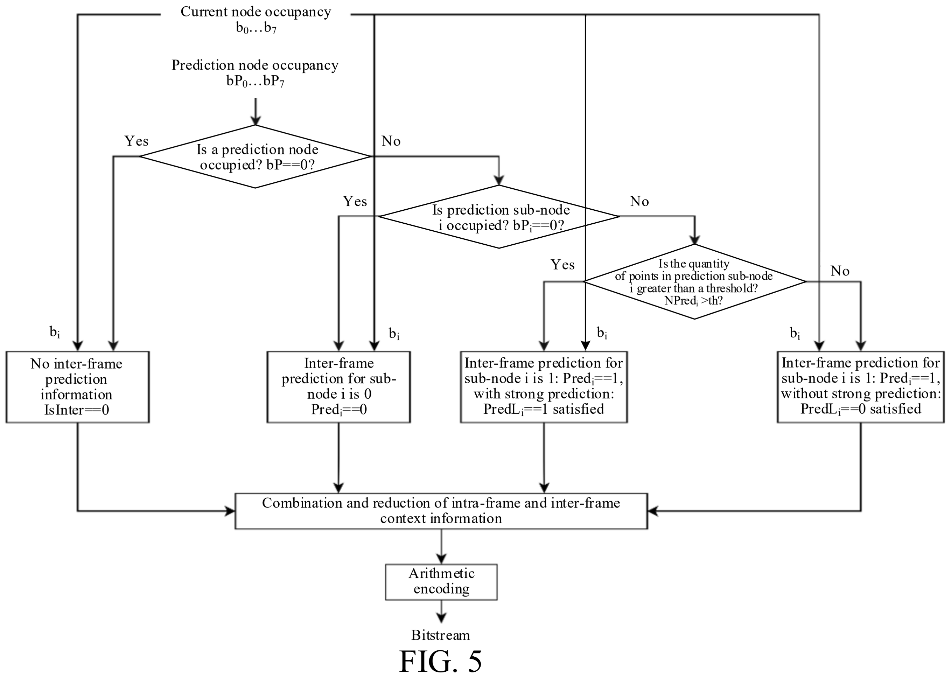

As shown in FIG. 5, the inter-frame prediction information is classified into the following types according to occupancy of prediction nodes:

> (a) No prediction (No pred): When a predicted node occupancy is zero (bP=0), that is, child nodes thereof are not occupancy, inter-frame prediction information is not used.
> (b) Pred0: When sub-node i is predicted to be null, sub-node i is predicted to not occupy bPi=0.
> (c) Pred1: When sub-node i is predicted to be non-null, sub-node i is predicted to occupy bPi=1. In this case, there are two cases according to the quantity of points included in the node:
>
> > predL=1: When sub-node i is predicted to be non-null and the quantity of points in sub-node i exceeds threshold th, sub-node i is strongly predicted to occupancy.
> > predL=0: When sub-node i is predicted to be non-null and the quantity of points in sub-node i exceeds threshold th, sub-node i is not strongly predicted.

Motion compensation is performed on the reference frame before inter-frame prediction, so that a difference between the reference frame and the current frame is smaller, and prediction information obtained after reference compensation is also more accurate. Currently, there are two compensation methods: global motion compensation and local motion compensation.

2.1 Global Motion Compensation in G-PCC

Global motion compensation enabling condition:

If the current frame is a non-independent encoded and decoded frame (I frame), global motion compensation is performed on the reference frame only when inter-frame prediction is enabled and global motion compensation is enabled.

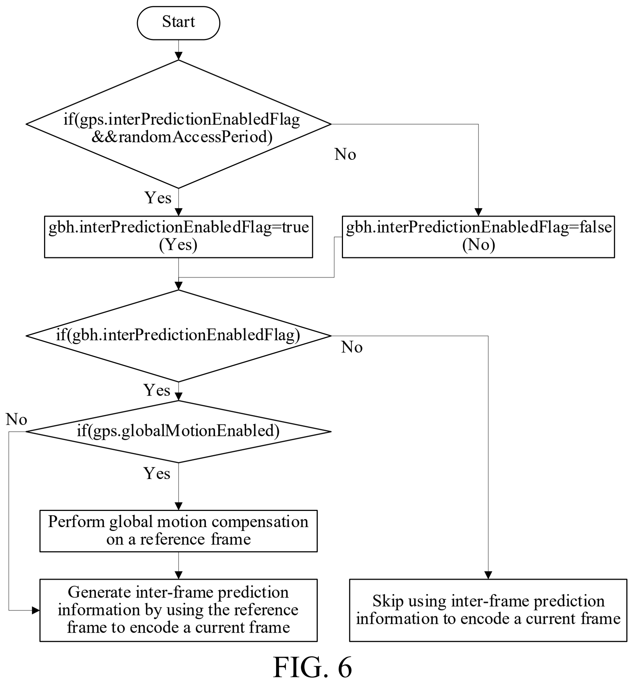

As shown in FIG. 6, when a gps layer inter-frame prediction enable flag gps.interPrediction Enabled Flag is true and the current frame is a non-independent encoded and decoded frame (e.g., an I frame), a gbh layer inter-frame prediction enable flag gbh.interPrediction Enabled Flag is true, otherwise, false. When gbh.interPredictionEnableFlag is false, no reference frame (or slice) generates inter-frame information as a context for encoding the current frame (or slice). When gbh.interPredictionEnableFlag is true, whether to compensate for the reference frame (or slice) is determined according to gps.globalMotionEnabled, and the reference frame (or slice) is used for generating inter-frame information as a context for encoding the current frame (or slice).

Global motion compensation algorithm at an encoder side:

(a) Obtaining and Utilization of Global Motion Compensation Matrix

Before multi-way tree partitioning is performed on a point cloud, a global motion compensation matrix (rotation matrix + translation vector) is selected to be directly obtained from the outside according to a parameter params.motionSrc or a global motion compensation matrix is calculated from the inside according to a reference frame and a current frame by using a least mean square (Least Mean Square, LMS) algorithm, where the global motion compensation matrix is encoded on a gbh layer. The reference frame is compensated by using the global motion compensation matrix to obtain a compensated reference frame. Global motion compensation is performed on the reference frame to obtain a compensated reference frame (compensation point (X, Y, Z) obtained after rotation and translation of point (X', Y', Z') in the reference frame). A calculation formula is as follows:

$$\begin{bmatrix} X' \\ Y' \\ Z' \end{bmatrix} = \begin{bmatrix} *** \\ *** \\ *** \end{bmatrix} \begin{bmatrix} X \\ Y \\ Z \end{bmatrix} + \begin{bmatrix} Vx \\ Vy \\ Vz \end{bmatrix}$$

where $\begin{bmatrix} *** \\ *** \\ *** \end{bmatrix}$ is the rotation matrix, and $\begin{bmatrix} Vx \\ Vy \\ Vz \end{bmatrix}$ is the translation vector.

(b) Compensation of Reference Frame

There are two compensation manners selected according to a parameter params.lpuType.

One manner is to compensate for a point determined as not being a road in the reference frame, to obtain a compensated reference frame, and the point is determined as a road point when a Z component in point (X, Y, Z) in the reference point cloud satisfies the following relationship:

$$gbh.\,gm\_thresh.\,second < Z < gbh.\,gm\_thresh.\,first$$

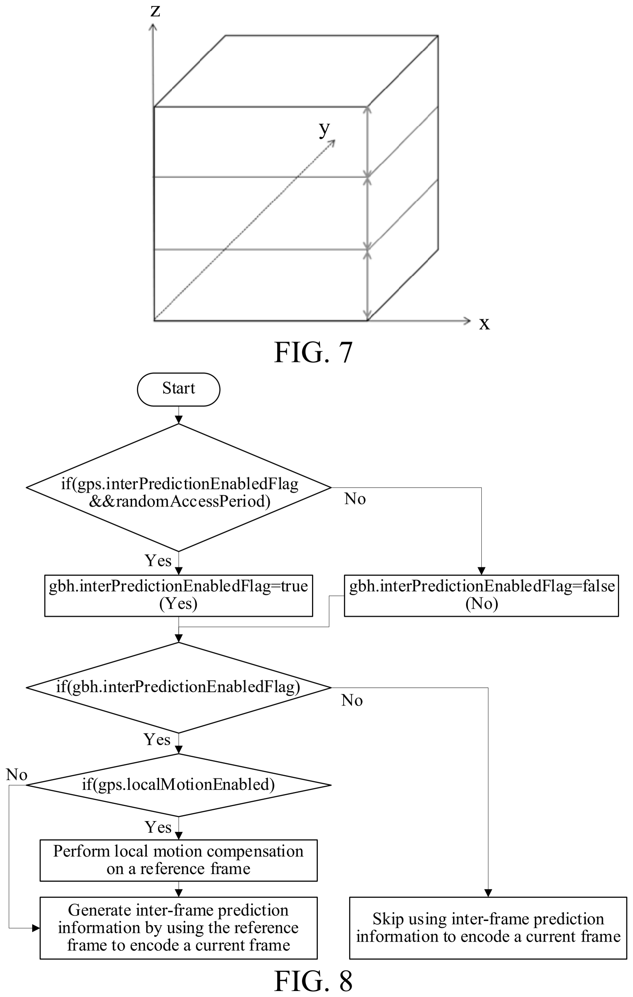

The other manner is to select, according to a Z value (according to a parameter configuration) and as shown in FIG. 7, regions of different heights to compensate or not to compensate based on rate-distortion optimization (Rate-distortion optimization, RDO), to obtain a compensated reference frame.

When encoding an occupancy of a current frame node, prediction information is obtained according to the compensated reference frame, to construct a context, to encode the occupancy of the current node.

Global motion compensation algorithm at a decoder side:

Before an occupancy of each node is decoded, a reference frame is compensated by using a global motion compensation matrix obtained through gbh layer decoding. There are two compensation manners based on parameter selection. One manner is to compensate for a point determined as a non-road point in the reference frame. The other manner is to select, according to a Z value (i.e., according to parameter configuration), regions of different heights to compensate or not to compensate based on an RDO result of the encoder side.

When a node occupancy is decoded, a context is constructed by using the compensated reference frame information, to decode the occupancy of the current node.

2.2 Local Motion Compensation in G-PCC:

Local motion compensation enabling condition:

If the current frame is a non-independent encoded and decoded frame (e.g., I frame), local motion compensation is performed on the reference frame only when inter-frame prediction is enabled and local motion compensation is enabled.

As shown in FIG. 8, when a gps layer inter-frame prediction enable flag gps.interPrediction Enabled Flag is true and the current frame is a non-independent encoded and decoded frame (an I frame), a gbh layer inter-frame prediction enable flag gbh.interPrediction Enabled Flag is true, otherwise, false. When gbh.interPredictionEnableFlag is false, no reference frame generates inter-frame information as a context for encoding the current frame. When gbh.interPredictionEnableFlag is true, whether to compensate for the reference frame is determined according to gps.localMotionEnabled, and the reference frame is used for generating inter-frame information as a context for encoding the current frame.

Local motion compensation algorithm at an encoder side:

A prediction unit (Prediction Unit, PU) is an octree node obtained by partitioning a to-be-encoded point cloud frame (or slice) according to an octree.

The PU is a processing unit for performing local motion compensation on the to-be-encoded point cloud frame (or slice).

A line processing unit (Line Processing Unit, LPU) is a maximum processing unit that performs local motion compensation on the to-be-encoded point cloud frame (or slice), and a side length thereof is set by a parameter. The LPU is split for at most n times to obtain a minimum PU, where n is set by a parameter.

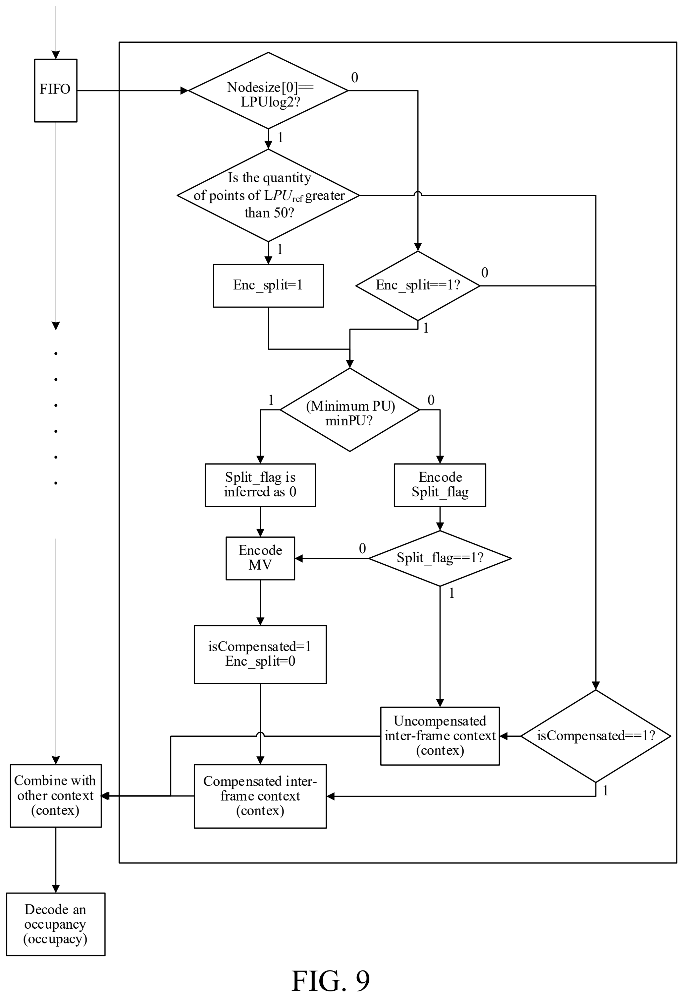

(a) A flowchart of an encoder side is shown in FIG. 9:
In FIG. 9, a boxed region is a flowchart of a local motion compensation part of an encoder side.

Nodesize[0]: A log2 value of a length of an X dimension among three dimensions: X, Y, and Z, of a node.

LPU: A maximum node (or a maximum prediction unit, where a size is set by a parameter) on which local motion compensation is performed.

LPUlog2: A log2 value of a side length of a maximum node (or a maximum prediction unit) on which local motion compensation is performed.

minPU: A minimum node (or a minimum prediction unit, where a size is set by a parameter, and the unit is obtained by splitting the LPU n times) on which local motion compensation is performed.

$LPU_{ref}$: A region having the same LPU spatial location as that in a current frame according to a Morton order in a reference frame.

Enc_split: Being 1 represents that a current node needs to encode split_flag. Being 0 represents that the current node does not need to encode split_flag, split_flag needs to be encoded only when a to-be-encoded node is a PU (or an LPU) (i.e., a prediction unit (or a maximum prediction unit)) and a reference node is not compensated, and split_flag does not need to be encoded when the to-be-encoded node is a non-PU (or an LPU) or the PU has been compensated.

split_flag: Being 1 represents that a current node needs to be split. Being 0 represents that the current node does not need to be split.

MV: A motion vector calculated according to a reference frame node $node_{ref}$ and a current frame node (node), to compensate for a reference frame.

isCompensaed: Being 1 represents that a point in $node_{ref}$ in a reference frame is compensated. Being 0 represents that a point in $node_{ref}$ in a reference frame is not compensated.

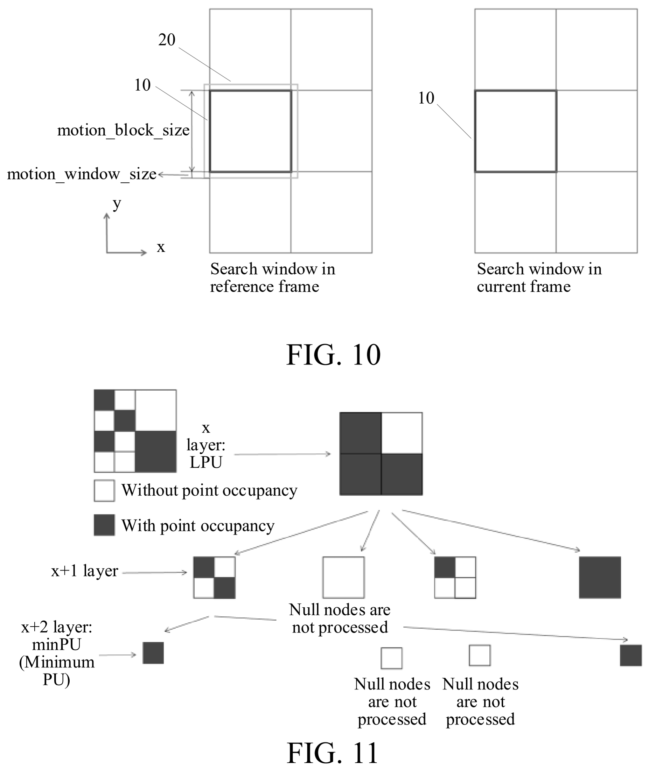

(b) Local motion compensation at an encoder side is performed in the following three cases:
(b1): If a node obtained by means of multi-way splitting is an LPU:
As shown in FIG. 10, a search window $LPUwindow_{ref}$ (when local motion compensation is performed, all points within the range of a box 20 are stored therein) is set according to $LPU_{ref}$ (a left box 10 in FIG. 10). When the quantity of points in $LPUwindow_{ref}$ is greater than 50, local motion compensation is performed, and split_flag is encoded.

If split_flags=0, the LPU is not split, and split_flags=0 and a motion vector $MV_{LPU}$ are encoded. According to $MV_{LPU}$, $LPU_{ref}$ is compensated, and a point in $LPU_{ref}$ is flagged to be compensated, the point of the compensated $LPU_{ref}$ within the range of box 10 is stored into the compensated reference point cloud compensatedPointCloud, and a compensated reference frame is used for obtaining prediction information as a context for encoding an occupancy of a current node.

If split_flags=1, the LPU is split, split_flags=1 is encoded, and a non-compensated reference frame is used for obtaining prediction information as a context for encoding an occupancy of a current node.

A calculation process of split_flags is as follows: according to the LPU and $LPU_{ref}$, $MV_{LPU}$ is calculated for compensating $LPU_{ref}$, a difference $D_{LPU}$ between the compensated $LPU_{ref}$ and the current frame node LPU, and $MV_{LPU}$

and $D_{LPU}$ are comprehensively encoded to obtain a comprehensive cost $C_{LPU}$. The LPU continues to be split into PUs in an octree partitioning manner, $MV_{PU\_i}$, $D_{PU\_i}$, and $C_{PU\_i}$, of each PU with point occupancy after splitting are calculated, and the sizes of $C_{LPU}$ and $\sum\limits_{i} C_{PU\_i}$ are compared to determine whether the LPU needs to be split. If $C_{LPU}$ is small, split_flags=0. If $\sum\limits_{i} C_{PU\_i}$ is small, split_flags=1.

(b2): If a node obtained by means of multi-cross splitting is a PU:

If a point in a reference node $PU_{ref}$ of a current node PU needs to be compensated but is not compensated: If the PU is minPU, split_flags does not need to be encoded, split_flags is inferred as 0, and only $MV_{PU}$ is encoded. According to $MV_{PU}$, $PU_{ref}$ is compensated, and a point in $PU_{ref}$ is flagged to be compensated, the point of the compensated $PU_{ref}$ within the range of box 10 is stored into the compensated reference point cloud, and a compensated reference frame is used for obtaining prediction information as a context for encoding an occupancy of a current node.

If the PU is not minPU, split_flags needs to be encoded.

If split_flags=0, the PU is not split.

split_flags=0 and $MV_{PU}$ are encoded. According to $MV_{PU}$, $PU_{ref}$ is compensated, and a point in $PU_{ref}$ is flagged to be compensated, the point of the compensated $PU_{ref}$ within the range of box 10 is stored into the compensated reference point cloud, and a compensated reference frame is used for obtaining prediction information as a context for encoding an occupancy of a current node.

If split_flags=1, the PU is split, split_flags=1 is encoded, and a non-compensated reference frame is used for obtaining prediction information as a context for encoding an occupancy of a current node.

If a point in a reference node $PU_{ref}$ of a current node PU needs to be compensated and has been compensated:

A compensated reference node is used for obtaining prediction information as a context for encoding an occupancy of a current node.

If a point in a reference node $PU_{ref}$ of a current node PU does not need to be compensated:

A non-compensated reference node is used for obtaining prediction information as a context for encoding an occupancy of a current node.

(b3): If a node obtained by means of multi-way splitting is not a PU (or an LPU).

Whether a reference node $node_{ref}$ is compensated is determined. If $node_{ref}$ is compensated, a compensated reference frame is used for obtaining prediction information as a context for encoding an occupancy of a current node. Otherwise, a non-compensated reference frame is used for obtaining prediction information as a context for encoding an occupancy of a current node.

As shown in FIG. 11, the foregoing process is shown by using n=2 (an LPU is split at most twice) as an example: As shown in FIG. 11, a leftmost node on each layer is used as an example. When a multi-way tree is partitioned to an x layer, a corresponding node is an LPU. In this case, the LPU determines that splitting is performed, split_flags=1 is encoded, and non-compensated reference frame prediction information is used as a context for encoding an occupancy of a current node. The size of an LPU node is 64. The size of a minPU node is 64>>2=16. The LPU is a maximum node on which local motion compensation is performed, and minPU is a minimum node on which local motion compensation is performed. When the multi-way tree is partitioned into an x layer, split flag: 1; MV: no transmission; occupancy: 1 0 1 1, encoded by using uncompensated reference frame information.

When the multi-way tree is partitioned into an x+1 layer, a corresponding node is a PU obtained after the LPU is split once. In this case, the PU determines that splitting is performed, split_flags=1 is encoded, and non-compensated reference frame prediction information is used as a context for encoding an occupancy of a current node. For a first split node: split flag:1; MV: no transmission; occupancy: 1001, encoded by using uncompensated reference frame information. For a third split node: split flag:1; MV: no transmission; occupancy: 1000. For a fourth split node: split flag:0; MV: transmission.

When the multi-way tree is partitioned to an x+2 layer, a corresponding node is minPU. In this case, minPU is determined to be not split, and split_flags is inferred as 0 (the node is a set minimum PU). $MV_{PU\_i}$ is encoded, and $MV_{PU\_i}$ is used for compensating node $PU_{ref}$ corresponding to a reference frame. A compensated reference frame is used for generating prediction information as a context for encoding an occupancy of a current node. For a first split node: split flag: no transmission, because the node is minPU which needs to be compensated; MV: transmission; occupancy: encoded by using compensated reference frame information. For a fourth split node: split flag: no transmission; MV: transmission.

Local motion compensation algorithm at a decoder side:

(a) Flowchart of decoder side:

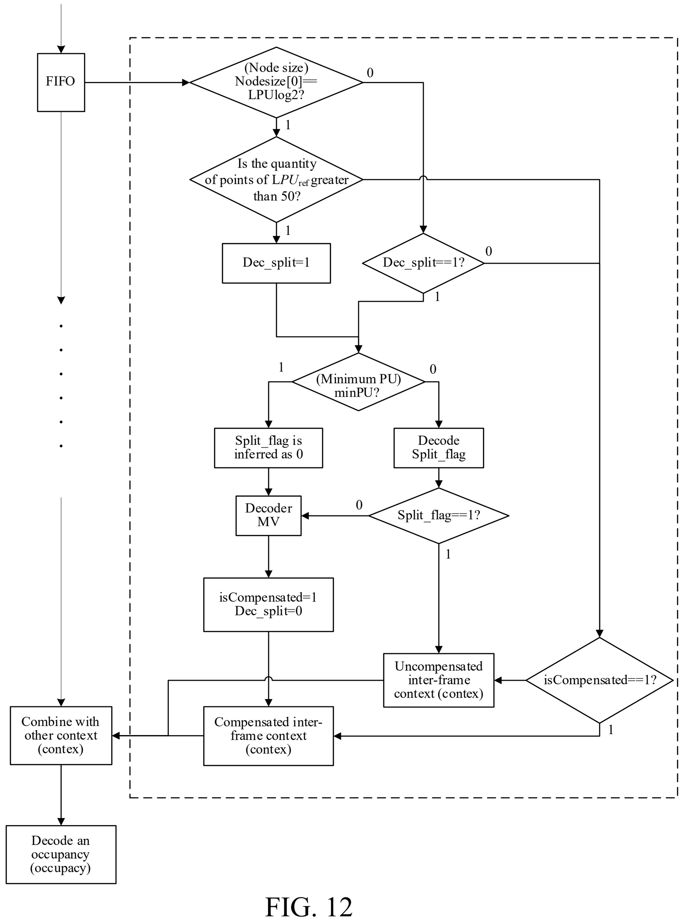

In FIG. 12, a region of a dashed-line box is a flowchart of a local motion compensation part of a decoder side.

Nodesize[0]: A log2 value of a length of an X dimension among three dimensions: X, Y, and Z, of a node.

LPU: A maximum node (or a maximum prediction unit, where a size is set by a parameter motion_block_size) on which local motion compensation is performed.

LPUlog2: A log2 value of a side length of a maximum node (or a maximum prediction unit) on which local motion compensation is performed.

minPU: A minimum node (or a minimum prediction unit, where a size is set by a parameter motion_min_pu_size, and the unit is obtained by splitting the LPU n times) on which local motion compensation is performed.

$LPU_{ref}$: A region having the same LPU spatial location as that in a current frame according to a Morton order in a reference frame.

Dec_split: Being 1 represents that a current node needs to decode split_flag. Being 0 represents that the current node does not need to decode split_flag, split_flag needs to be decoded only when a to-be-decoded node is a PU (or an LPU) (i.e., a prediction unit (or a maximum prediction unit)) and a reference node is not compensated, and split_flag does not need to be decoded when the to-be-decoded node is a non-PU (or an LPU) or the PU has been compensated.

split_flag: Being 1 represents that a current node needs to be split. Being 0 represents that the current node does not need to be split.

MV: Motion vector for compensating a reference frame

isCompensaed: Being 1 represents that a point in $node_{ref}$ in a reference frame is compensated. Being 0 represents that a point in $node_{ref}$ in a reference frame is not compensated.

(a) Local motion compensation at a decoder side is performed in the following three cases:
(b1) If the to-be-decoded node is an LPU:
If the quantity of points in $LPU_{ref}$ is greater than 50, local motion compensation is performed, and split_flag is decoded.

If split_flags=0, the LPU is not split, and $MV_{LPU}$ is decoded. According to $MV_{LPU}$, $LPU_{ref}$ is compensated, and a point in $LPU_{ref}$ is flagged to be compensated, the point of the compensated $LPU_{ref}$ within the range of box 10 is stored into the compensated reference point cloud, and a compensated reference frame is used for obtaining prediction information as a context for encoding an occupancy of a current node.

If split_flags=1, the LPU is split, and a non-compensated reference frame is used for obtaining prediction information as a context for encoding an occupancy of a current node.

(b2) If the to-be-decoded node is a PU:

If a point in a reference node $PU_{ref}$ of a current node PU needs to be compensated but is not compensated: If the PU is minPU, split_flags does not need to be decoded, and split_flags is inferred as 0.

If the PU is not minPU, split_flags is decoded.

split_flags=0 and $MV_{PU}$ are encoded. According to $MV_{PU}$, $PU_{ref}$ is compensated, and a point in $PU_{ref}$ is flagged to be compensated, the point of the compensated $PU_{ref}$ within the range of box 10 is stored into the compensated reference point cloud, and a compensated reference frame is used for obtaining prediction information as a context for decoding an occupancy of a current node.

If split_flags=1, the PU is split, and a non-compensated reference frame is used for obtaining prediction information as a context for decoding an occupancy of a current node.

If a point in a reference node $PU_{ref}$ of a current node PU needs to be compensated and has been compensated: A compensated reference frame is used for obtaining prediction information as a context for decoding an occupancy of a current node.

(b3): If the to-be-decoded node is not a PU (or an LPU).

Whether a reference node $node_{ref}$ is compensated is determined. If $node_{ref}$ is compensated, a compensated reference frame is used for obtaining prediction information as a context for decoding an occupancy of a current node. Otherwise, a non-compensated reference frame is used for obtaining prediction information as a context for decoding an occupancy of a current node.

The following describes, in detail, a point cloud encoding method, a point cloud decoding method, and related devices provided in embodiments of this application through some embodiments and application scenarios thereof with reference to the accompanying drawings.

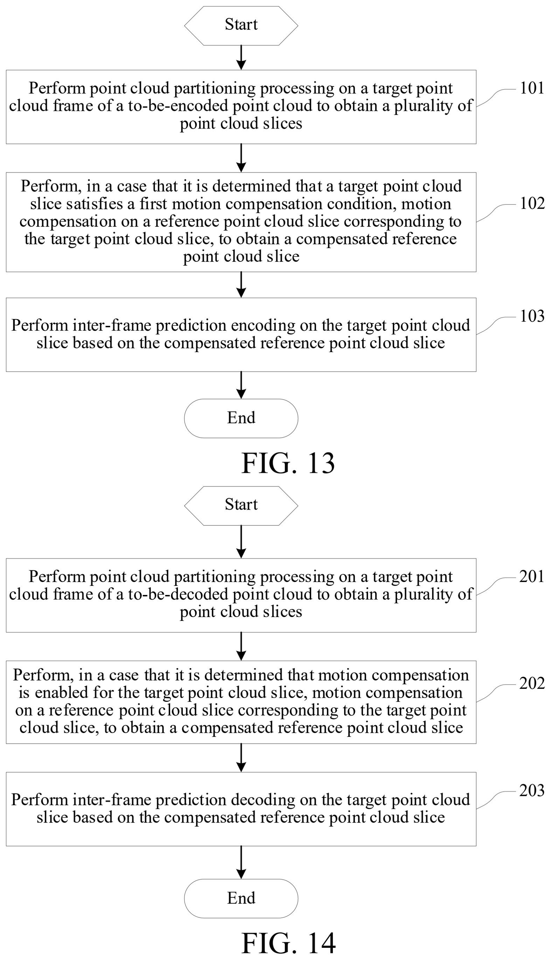

Refer to FIG. 13. FIG. 13 is a flowchart of a point cloud encoding method according to an embodiment of this application. The method is applied to an encoder side. As shown in FIG. 13, the method includes the following steps.

Step 101: Perform point cloud partitioning processing on a target point cloud frame of a to-be-encoded point cloud to obtain a plurality of point cloud slices.

The to-be-encoded point cloud may be a point cloud sequence, and the point cloud sequence may form a plurality of point cloud frames. The target point cloud frame may be any point cloud frame among the plurality of point cloud frames formed by the to-be-encoded point cloud. The point cloud slice may alternatively be described as a slice (slice).

Step 102: Perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices.

The target point cloud slice may be any point cloud slice among the plurality of point cloud slices. The first motion compensation condition may include a global motion compensation condition or a local motion compensation condition. The performing, in a case that it is determined that a target point cloud slice satisfies a first motion compensation condition, motion compensation on a reference point cloud slice corresponding to the target point cloud slice, to obtain a compensated reference point cloud slice may include: performing, in a case that it is determined that a target point cloud slice satisfies the global motion compensation condition, global motion compensation on a reference point cloud slice corresponding to the target point cloud slice, to obtain a compensated reference point cloud slice; or, performing, in a case that it is determined that a target point cloud slice satisfies the local motion compensation condition, local motion compensation on a reference point cloud slice corresponding to the target point cloud slice, to obtain a compensated reference point cloud slice; or, performing, in a case that it is determined that a target point cloud slice satisfies the global motion compensation condition, global motion compensation on a reference point cloud slice corresponding to the target point cloud slice, to obtain a reference point cloud slice after global motion compensation, and performing, in a case that it is determined that a target point cloud slice satisfies the local motion compensation condition, local motion compensation on the reference point cloud slice after global motion compensation, to obtain a compensated reference point cloud slice. This is not limited in this embodiment.

In addition, the first motion compensation condition may include a global motion compensation condition or a local motion compensation condition. The global motion compensation condition may include that a feature of the target point cloud slice conforms to a preset global motion compensation feature, or a feature of the reference point cloud slice corresponding to the target point cloud slice conforms to a preset global motion compensation feature. Different global motion compensation conditions may be set for different scenarios. The global motion compensation condition is not limited in this embodiment. The local motion compensation condition may mean that a feature of the target point cloud slice conforms to a preset local motion compensation feature, or a feature of the reference point cloud slice corresponding to the target point cloud slice conforms to a preset local motion compensation feature. Different local motion compensation conditions may be set for different scenarios. The local motion compensation condition is not limited in this embodiment.

Step 103: Perform inter-frame prediction encoding on the target point cloud slice based on the compensated reference point cloud slice.

The performing inter-frame prediction encoding on the target point cloud slice based on the compensated reference point cloud slice may be: obtaining prediction information based on the compensated reference point cloud slice, and using the prediction information as a context for encoding an occupancy of a node corresponding to the target point cloud slice.

It should be noted that after point cloud partitioning processing is performed on a target point cloud frame of a to-be-encoded point cloud to obtain a plurality of point cloud slices, whether a target point cloud slice satisfies a first motion compensation condition may be determined. Motion compensation is performed on a reference point cloud slice corresponding to the target point cloud slice in a case that it is determined that the target point cloud slice satisfies the first motion compensation condition, to obtain a compensated reference point cloud slice, where the target point cloud slice is a point cloud slice among the plurality of point cloud slices. Inter-frame prediction encoding is performed on the target point cloud slice based on the compensated reference point cloud slice. In a case that it is determined that the target point cloud slice does not satisfy the first motion compensation condition, inter-frame prediction encoding may be performed on the target point cloud slice based on the reference point cloud slice corresponding to the target point cloud slice.

In an implementation, the point cloud encoding method further includes:
encoding first indication information, where the first indication information is used for indicating whether motion compensation is enabled for the target point cloud slice, and a bitstream corresponding to the to-be-encoded point cloud includes an encoding result of the first indication information.

In a case that motion compensation is performed on a reference point cloud slice corresponding to the target point cloud slice, the first indication information indicates that motion compensation is enabled for the target point cloud slice.

In an implementation, the encoding first indication information includes:

encoding second indication information, where the second indication information is used for indicating whether motion compensation is allowed to be performed on the target point cloud frame, and the bitstream further includes an encoding result of the second indication information; and
encoding the first indication information in a case that the second indication information indicates that motion compensation is allowed to be performed on the target point cloud frame.

In an implementation, the encoding first indication information further includes:
encoding third indication information, where the third indication information is used for indicating whether inter-frame prediction is allowed to be performed on the target point cloud slice, and the bitstream further includes an encoding result of the third indication information.

The encoding the first indication information in a case that the second indication information indicates that motion compensation is allowed to be performed on the target point cloud frame includes:
encoding the first indication information in a case that the second indication information indicates that motion compensation is allowed to be performed on the target point cloud frame and the third indication information indicates that inter-frame prediction is allowed to be performed on the target point cloud slice.

In an implementation, the encoding second indication information includes:

encoding fourth indication information, where the fourth indication information is used for indicating whether inter-frame prediction is allowed to be performed on the target point cloud frame, and the bitstream further includes an encoding result of the fourth indication information;
encoding fifth indication information, where the fifth indication information is used for indicating whether motion compensation is allowed to be performed on the to-be-encoded point cloud, and the bitstream further includes an encoding result of the fifth indication information; and
encoding the second indication information in a case that the fourth indication information indicates that inter-frame prediction is allowed to be performed on the target point cloud frame and the fifth indication information indicates that motion compensation is allowed to be performed on the to-be-encoded point cloud.

In an implementation, the bitstream further includes an encoding result of sixth indication information. The sixth indication information is used for indicating whether inter-frame prediction is allowed to be performed on the to-be-encoded point cloud.

The encoding fourth indication information includes: encoding fourth indication information in a case that the sixth indication information indicates that inter-frame prediction is allowed to be performed on the to-be-encoded point cloud.

Alternatively,
The encoding fifth indication information includes: encoding fifth indication information in a case that the sixth indication information indicates that inter-frame prediction is allowed to be performed on the to-be-encoded point cloud.

In an implementation, the bitstream further includes an encoding result of fourth indication information. The fourth indication information is used for indicating whether inter-frame prediction is allowed to be performed on the target point cloud frame. The encoding third indication information includes:
encoding third indication information in a case that the fourth indication information indicates that inter-frame prediction is allowed to be performed on the target point cloud frame.

In an implementation, before the performing, in a case that it is determined that a target point cloud slice satisfies a first motion compensation condition, motion compensation on a reference point cloud slice corresponding to the target point cloud slice, the method further includes:

performing motion compensation on a reference point cloud frame corresponding to the target point cloud frame in a case that it is determined that the target point cloud frame satisfies a second motion compensation condition, to obtain a compensated reference point cloud frame; and
determining a reference point cloud slice corresponding to the target point cloud slice based on the compensated reference point cloud frame.

In an implementation, the encoding first indication information includes:

encoding seventh indication information, where the seventh indication information is used for indicating whether inter-frame prediction is allowed to be performed on the target point cloud frame, and the bitstream further includes an encoding result of the seventh indication information; and

encoding the first indication information in a case that the seventh indication information indicates that inter-frame prediction is allowed to be performed on the target point cloud frame.

In an implementation, the encoding first indication information further includes:

encoding eighth indication information, where the eighth indication information is used for indicating whether motion compensation is allowed to be performed on the to-be-encoded point cloud, and the bitstream further includes an encoding result of the eighth indication information.

The encoding the first indication information in a case that the seventh indication information indicates that inter-frame prediction is allowed to be performed on the target point cloud frame includes:

encoding the first indication information in a case that the eighth indication information indicates that motion compensation is allowed to be performed on the to-be-encoded point cloud and the seventh indication information indicates that inter-frame prediction is allowed to be performed on the target point cloud frame.

In an implementation, the method further includes:

encoding ninth indication information, where the ninth indication information is used for indicating whether motion compensation is enabled for the target point cloud frame.

In a case that motion compensation is performed on a reference point cloud frame corresponding to the target point cloud frame, the ninth indication information indicates that motion compensation is enabled for the target point cloud frame.

In an implementation, the bitstream further includes an encoding result of seventh indication information and an encoding result of eighth indication information. The seventh indication information is used for indicating whether to perform inter-frame prediction on the target point cloud frame. The eighth indication information is used for indicating whether to allow to perform motion compensation on the to-be-encoded point cloud.

The encoding ninth indication information includes:

encoding ninth indication information in a case that the seventh indication information indicates that inter-frame prediction is performed on the target point cloud frame and the eighth indication information indicates that motion compensation is allowed to be performed on the to-be-encoded point cloud.

It should be noted that motion compensation in the foregoing implementation may be global motion compensation, local motion compensation, or another type of motion compensation.

In the related art, a global motion advanced syntax element is not flexible enough, and a global motion enable flag gps.globalMotionEnabled is a frame-level syntax element. When the enable flag is true, global motion compensation needs to be performed on all slices. However, in a particular scenario, not all partitioned slices need to be subjected to global motion compensation. For example, when the to-be-encoded point cloud represents a person model constructed by a computer, a motion of such a model is similar to a rigid-body motion. In this case, if only an arm of the person model moves in several consecutive frames and other parts do not move, when the point cloud partitions slices, a moving arm part is partitioned into one slice, and global motion compensation is performed on only the slice, while other slices do not need to be subjected to global motion compensation. In this case, a slice-level global motion enable flag is needed to indicate whether global motion compensation needs to be performed on the to-be-encoded slice, and a slice-level global motion enable flag syntax element is lacked in the related art. In addition, because there is only a frame-level global motion enable flag in the related art, in the foregoing case, all of the other slices on the arm part need to be subjected to global motion compensation and encode motion compensation information, which transmits redundant information, leading to relatively low encoding and decoding efficiency.

In the embodiments of this application, point cloud partitioning processing is performed on a target point cloud frame of a to-be-encoded point cloud to obtain a plurality of point cloud slices. In a case that it is determined that a target point cloud slice satisfies a first motion compensation condition, motion compensation is performed on a reference point cloud slice corresponding to the target point cloud slice, to obtain a compensated reference point cloud slice, where the target point cloud slice is a point cloud slice among the plurality of point cloud slices. Inter-frame prediction encoding is performed on the target point cloud slice based on the compensated reference point cloud slice. In this way, in a case that it is determined that the target point cloud slice satisfies the first motion compensation condition, motion compensation is performed on the reference point cloud slice corresponding to the target point cloud slice, so that whether to perform motion compensation can be determined for each point cloud slice, and encoding redundancy caused by determining motion compensation at a point cloud frame level can be reduced, thereby improving efficiency of point cloud encoding and decoding.

Optionally, the first motion compensation condition includes a global motion compensation condition. The performing, in a case that it is determined that a target point cloud slice satisfies a first motion compensation condition, motion compensation on a reference point cloud slice corresponding to the target point cloud slice, to obtain a compensated reference point cloud slice includes:

performing, in a case that it is determined that a target point cloud slice satisfies the global motion compensation condition, global motion compensation on a reference point cloud slice corresponding to the target point cloud slice, to obtain a compensated reference point cloud slice.

In this implementation, in a case that it is determined that the target point cloud slice satisfies the global motion compensation condition, global motion compensation is performed on the reference point cloud slice corresponding to the target point cloud slice to obtain a compensated reference point cloud slice, so that whether to perform global motion compensation can be determined for each point cloud slice, and encoding redundancy caused by determining global motion compensation at a point cloud frame level can be reduced, thereby improving efficiency of point cloud encoding and decoding.

Optionally, the method further includes:
encoding first indication information, where the first indication information is used for indicating whether global motion compensation is enabled for the target point cloud slice, and a bitstream corresponding to the to-be-encoded point cloud includes an encoding result of the first indication information.

In a case that global motion compensation is performed on a reference point cloud slice corresponding to the target point cloud slice, the first indication information indicates that global motion compensation is enabled for the target point cloud slice.

The first indication information may be a gbh_globalMotionEnabled enable flag. The enable flag may be a bool (bool) variable, and may be false or true to indicate that the enable flag is enabled. The gbh_globalMotionEnabled enable flag may be a geometry data unit (Geometry Data Unit, GDU) parameter.

In this implementation, first indication information is encoded, where the first indication information is used for indicating whether global motion compensation is enabled for the target point cloud slice, and a bitstream corresponding to the to-be-encoded point cloud includes an encoding result of the first indication information. Whether global motion compensation is enabled for the target point cloud slice is indicated by using the first indication information, and a decoder side can determine, by using the first indication information, whether to perform global motion compensation on the target point cloud slice, thereby implementing determining of global motion compensation at a point cloud slice level, and improving the efficiency of point cloud encoding and decoding.

Optionally, the encoding first indication information includes:

encoding second indication information, where the second indication information is used for indicating whether global motion compensation is allowed to be performed on the target point cloud frame, and the bitstream further includes an encoding result of the second indication information; and
encoding the first indication information in a case that the second indication information indicates that global motion compensation is allowed to be performed on the target point cloud frame.

The second indication information may be a gps_globalMotionEnabled enable flag. The enable flag may be a bool (bool) variable, and may be false or true to indicate that the enable flag is enabled. The gps_globalMotionEnabled enable flag may be a geometry parameter set (Geometry Paramater Set, gps) parameter.

In this implementation, second indication information is encoded, where the second indication information is used for indicating whether global motion compensation is allowed to be performed on the target point cloud frame, and the bitstream further includes an encoding result of the second indication information. The first indication information is encoded in a case that the second indication information indicates that global motion compensation is allowed to be performed on the target point cloud frame. In this way, the decoder side can determine, by using the second indication information, whether the first indication information needs to be decoded, and does not need to determine global motion compensation at a point cloud slice level for a point cloud frame on which global motion compensation is not allowed, so that the encoding and decoding efficiency can be further improved by using frame-level global motion compensation.

Optionally, the encoding first indication information further includes:
encoding third indication information, where the third indication information is used for indicating whether inter-frame prediction is allowed to be performed on the target point cloud slice, and the bitstream further includes an encoding result of the third indication information.

The encoding the first indication information in a case that the second indication information indicates that global motion compensation is allowed to be performed on the target point cloud frame includes:

encoding the first indication information in a case that the second indication information indicates that global motion compensation is allowed to be performed on the target point cloud frame and the third indication information indicates that inter-frame prediction is allowed to be performed on the target point cloud slice.

The third indication information may be a gbh_interPredictionEnabledFlag enable flag. The enable flag may be a bool (bool) variable, and may be false or true to indicate that the enable flag is enabled. The gbh_interPredictionEnabledFlag enable flag may be a GDU parameter.

In this implementation, the first indication information is encoded in a case that the second indication information indicates that global motion compensation is allowed to be performed on the target point cloud frame and the third indication information indicates that inter-frame prediction is allowed to be performed on the target point cloud slice. In this way, the decoder side can determine, by using the second indication information and the third indication information, whether the first indication information needs to be decoded, and does not need to determine global motion compensation at a point cloud slice level for a point cloud frame on which global motion compensation is not allowed or a point cloud slice on which inter-frame prediction is not allowed, so that the encoding and decoding efficiency can be further improved.

Optionally, the encoding second indication information includes:

encoding fourth indication information, where the fourth indication information is used for indicating whether inter-frame prediction is allowed to be performed on the target point cloud frame, and the bitstream further includes an encoding result of the fourth indication information;
encoding fifth indication information, where the fifth indication information is used for indicating whether global motion compensation is allowed to be performed on the to-be-encoded point cloud, and the bitstream further includes an encoding result of the fifth indication information; and
encoding the second indication information in a case that the fourth indication information indicates that inter-frame prediction is allowed to be performed on the target point cloud frame and the fifth indication information indicates that global motion compensation is allowed to be performed on the to-be-encoded point cloud.

The fourth indication information may be a gps_inter_frame_prediction_enabled_flag enable flag. The enable flag may be a bool (bool) variable, and may be false or true to indicate that the enable flag is enabled. The gps_inter_frame_prediction_enabled_flag enable flag may be a gps parameter. The fifth indication information may be an sps_globalMotionEnable enable flag. The enable flag may be a bool (bool) variable, and may be false or true to indicate that the enable flag is enabled. The sps_globalMotionEnable enable flag may be a sequence parameter set (Sequence Paramater Set, sps) parameter.

In this implementation, second indication information is encoded in a case that the fourth indication information indicates that inter-frame prediction is allowed to be performed on the target point cloud frame and the fifth indication information indicates that global motion compensation is allowed to be performed on the to-be-encoded point cloud. In this way, the decoder side can determine, by using the fourth indication information and the fifth indication information, whether the second indication information needs to be decoded, and does not need to determine global motion compensation at a point cloud frame level for the to-be-encoded point cloud on which global motion compensation is not allowed or a point cloud frame on which inter-frame prediction is not allowed, so that the encoding and decoding efficiency can be further improved.

Optionally, the bitstream further includes an encoding result of sixth indication information. The sixth indication information is used for indicating whether inter-frame prediction is allowed to be performed on the to-be-encoded point cloud.

The encoding fourth indication information includes: encoding fourth indication information in a case that the sixth indication information indicates that inter-frame prediction is allowed to be performed on the to-be-encoded point cloud.

Alternatively,
The encoding fifth indication information includes: encoding fifth indication information in a case that the sixth indication information indicates that inter-frame prediction is allowed to be performed on the to-be-encoded point cloud.

The sixth indication information may be an sps_inter_frame_prediction_enabled_flag enable flag. The enable flag may be a bool (bool) variable, and may be false or true to indicate that the enable flag is enabled. The sps_inter_frame_prediction_enabled_flag enable flag may be an sps parameter.

In this implementation, fourth indication information is encoded in a case that the sixth indication information indicates that inter-frame prediction is allowed to be performed on the to-be-encoded point cloud. In this way, the decoder side can determine, by using the sixth indication information, whether the fourth indication information needs to be decoded, and does not need to determine inter-frame prediction at a point cloud frame level for the to-be-encoded point cloud on which inter-frame prediction is not allowed, so that the encoding and decoding efficiency can be further improved. Alternatively, fifth indication information is encoded in a case that the sixth indication information indicates that inter-frame prediction is allowed to be performed on the to-be-encoded point cloud. In this way, the decoder side can determine, by using the sixth indication information, whether the fifth indication information needs to be decoded, and does not need to determine global motion compensation of the to-be-encoded point cloud for the to-be-encoded point cloud on which inter-frame prediction is not allowed, so that the encoding and decoding efficiency can be further improved.

Optionally, the bitstream further includes an encoding result of fourth indication information. The fourth indication information is used for indicating whether inter-frame prediction is allowed to be performed on the target point cloud frame. The encoding third indication information includes:
encoding third indication information in a case that the fourth indication information indicates that inter-frame prediction is allowed to be performed on the target point cloud frame.

The fourth indication information may be a gps_inter_frame_prediction_enabled_flag flag. The flag may be a bool (bool) variable, and may be false or true to indicate that the flag is enabled. The gps_inter_frame_prediction_enabled_flag flag may be a gps parameter.

In this implementation, third indication information is encoded in a case that the fourth indication information indicates that inter-frame prediction is allowed to be performed on the target point cloud frame. In this way, the decoder side can determine, by using the fourth indication information, whether the third indication information needs to be decoded, and does not need to determine inter-frame prediction at a point cloud slice level for a point cloud frame on which inter-frame prediction is not allowed, so that the encoding and decoding efficiency can be further improved.

Optionally, before the performing, in a case that it is determined that a target point cloud slice satisfies a first motion compensation condition, motion compensation on a reference point cloud slice corresponding to the target point cloud slice, the method further includes:

performing global motion compensation on a reference point cloud frame corresponding to the target point cloud frame in a case that it is determined that the target point cloud frame satisfies a second motion compensation condition, to obtain a compensated reference point cloud frame; and

determining a reference point cloud slice corresponding to the target point cloud slice based on the compensated reference point cloud frame.

The second motion compensation condition may include a global motion compensation condition. The global motion compensation condition may include that a feature of the target point cloud frame conforms to a preset global motion compensation feature, or a feature of the reference point cloud frame corresponding to the target point cloud frame conforms to a preset global motion compensation feature. Different global motion compensation conditions may be set for different scenarios. The global motion compensation condition is not limited in this embodiment.

In addition, the compensated reference point cloud frame may be partitioned into point cloud slices, and a reference point cloud slice corresponding to the target point cloud slice is determined in the partitioned point cloud slices based on a position of the target point cloud slice in the target point cloud frame.

In this way, global motion compensation is performed on a reference point cloud frame corresponding to the target point cloud frame in a case that it is determined that the target point cloud frame satisfies a second motion compensation condition, to obtain a compensated reference point cloud frame. A reference point cloud slice corresponding to the target point cloud slice is determined based on the compensated reference point cloud frame. In this way, two-level global motion compensation is realized by means of global motion compensation at a point cloud frame level and global motion compensation at a point cloud slice level, so that a global motion compensation effect can be further improved.

Optionally, the encoding first indication information includes:

encoding seventh indication information, where the seventh indication information is used for indicating whether inter-frame prediction is allowed to be performed on the target point cloud frame, and the bitstream further includes an encoding result of the seventh indication information; and

encoding the first indication information in a case that the seventh indication information indicates that inter-frame prediction is allowed to be performed on the target point cloud frame.

The seventh indication information may be a frame_inter_prediction flag. The flag may be a bool (bool) variable, and may be false or true to indicate that the flag is enabled. The frame_inter_prediction flag may be a gps parameter.

In this implementation, the first indication information is encoded in a case that the seventh indication information indicates that inter-frame prediction is allowed to be performed on the target point cloud frame. The decoder side can determine, by using the seventh indication information, whether the first indication information needs to be decoded, and does not need to determine global motion compensation at a point cloud slice level for a point cloud frame on which inter-frame prediction is not allowed, so that the encoding and decoding efficiency can be further improved.

Optionally, the encoding first indication information further includes:
encoding eighth indication information, where the eighth indication information is used for indicating whether global motion compensation is allowed to be performed on the to-be-encoded point cloud, and the bitstream further includes an encoding result of the eighth indication information.

The encoding the first indication information in a case that the seventh indication information indicates that inter-frame prediction is allowed to be performed on the target point cloud frame includes:
encoding the first indication information in a case that the eighth indication information indicates that global motion compensation is allowed to be performed on the to-be-encoded point cloud and the seventh indication information indicates that inter-frame prediction is allowed to be performed on the target point cloud frame.

The eighth indication information may be an sps_globalMotionEnable enable flag. The enable flag may be a bool (bool) variable, and may be false or true to indicate that the enable flag is enabled. The sps_globalMotionEnable enable flag may be an sps parameter.

In this implementation, the first indication information is encoded in a case that the eighth indication information indicates that global motion compensation is allowed to be performed on the to-be-encoded point cloud and the seventh indication information indicates that inter-frame prediction is allowed to be performed on the target point cloud frame. In this way, the decoder side can determine, by using the eighth indication information and the seventh indication information, whether the first indication information needs to be decoded, and does not need to determine global motion compensation at a point cloud slice level for a point cloud frame on which inter-frame prediction is not allowed or the to-be-encoded point cloud on which global motion compensation is not allowed, so that the encoding and decoding efficiency can be further improved.

Optionally, the method further includes:
encoding ninth indication information, where the ninth indication information is used for indicating whether global motion compensation is enabled for the target point cloud frame.

In a case that global motion compensation is performed on a reference point cloud frame corresponding to the target point cloud frame, the ninth indication information indicates that global motion compensation is enabled for the target point cloud frame.

The ninth indication information may be a gps.globalMotionEnabled enable flag. The enable flag may be a bool (bool) variable, and may be false or true to indicate that the enable flag is enabled. The gps.globalMotionEnabled enable flag may be a gps parameter.

In this implementation, ninth indication information is encoded, where the ninth indication information is used for indicating whether global motion compensation is enabled for the target point cloud frame. The ninth indication information indicates whether global motion compensation is enabled for the target point cloud frame, and the decoder side can determine, by using the ninth indication information, whether to perform global motion compensation on the target point cloud frame, to determine global motion compensation at a point cloud frame level, thereby realizing two-level global motion compensation and improving the global motion compensation effect.

Optionally, the bitstream further includes an encoding result of seventh indication information and an encoding result of eighth indication information. The seventh indication information is used for indicating whether to perform inter-frame prediction on the target point cloud frame. The eighth indication information is used for indicating whether to allow to perform global motion compensation on the to-be-encoded point cloud.

The encoding ninth indication information includes:
encoding ninth indication information in a case that the seventh indication information indicates that inter-frame prediction is performed on the target point cloud frame and the eighth indication information indicates that global motion compensation is allowed to be performed on the to-be-encoded point cloud.

The seventh indication information may be a frame_inter_prediction flag. The flag may be a bool (bool) variable, and may be false or true to indicate that the flag is enabled. The frame_inter_prediction flag may be a gps parameter. The eighth indication information may be an sps_globalMotionEnable enable flag. The enable flag may be a bool (bool) variable, and may be false or true to indicate that the enable flag is enabled. The sps_globalMotionEnable enable flag may be an sps parameter.

In this implementation, ninth indication information is encoded in a case that the seventh indication information indicates that inter-frame prediction is performed on the target point cloud frame and the eighth indication information indicates that global motion compensation is allowed to be performed on the to-be-encoded point cloud. In this way, the decoder side can determine, by using the eighth indication information and the seventh indication information, whether the ninth indication information needs to be decoded, and does not need to determine global motion compensation at a point cloud frame level for a point cloud frame on which inter-frame prediction is not allowed or the to-be-encoded point cloud on which global motion compensation is not allowed, so that the encoding and decoding efficiency can be further improved.

Optionally, the performing global motion compensation on a reference point cloud frame corresponding to the target point cloud frame, to obtain a compensated reference point cloud frame includes:

determining a global motion compensation matrix corresponding to the target point cloud frame; and
performing, based on the global motion compensation matrix, global motion compensation on a reference point cloud frame corresponding to the target point cloud frame, to obtain a compensated reference point cloud frame.

The bitstream further includes an encoding result of tenth indication information. The tenth indication information is used for indicating the global motion compensation matrix.

The global motion compensation matrix may include a global motion rotation matrix and a translation vector.

In this implementation, a global motion compensation matrix corresponding to the target point cloud frame is determined. Based on the global motion compensation matrix, global motion compensation is performed on a reference point cloud frame corresponding to the target point cloud frame, to obtain a compensated reference point cloud frame, where the bitstream further includes an encoding result of tenth indication information, and the tenth indication information is used for indicating the global motion compensation matrix. In this way, the decoder side can realize global motion compensation of the point cloud frame by using the global motion compensation matrix carried in the bitstream, thereby realizing inter-frame prediction decoding.

Refer to FIG. 14. FIG. 14 is a flowchart of a point cloud decoding method according to an embodiment of this application. The method is applied to a decoder side. As shown in FIG. 14, the point cloud decoding method includes the following steps.

Step 201: Perform point cloud partitioning processing on a target point cloud frame of a to-be-decoded point cloud to obtain a plurality of point cloud slices.

Step 202: Perform, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices.

Step 203: Perform inter-frame prediction decoding on the target point cloud slice based on the compensated reference point cloud slice.

In an implementation, before the performing, in a case that it is determined that motion compensation is enabled for a target point cloud slice, motion compensation on a reference point cloud slice corresponding to the target point cloud slice, the method further includes:

decode first indication information in a bitstream, where the first indication information is used for indicating whether motion compensation is enabled for the target point cloud slice; and
determine, based on the first indication information, whether motion compensation is enabled for the target point cloud slice.

In an implementation, the decoding first indication information in a bitstream includes:

decoding second indication information in the bitstream, where the second indication information is used for indicating whether motion compensation is allowed to be performed on the target point cloud frame; and
decoding first indication information in the bitstream in a case that the second indication information indicates that motion compensation is allowed to be performed on the target point cloud frame.

In an implementation, the decoding first indication information in a bitstream further includes:
decoding third indication information in the bitstream, where the third indication information is used for indicating whether inter-frame prediction is allowed to be performed on the target point cloud slice.

The decoding first indication information in the bitstream in a case that the second indication information indicates that motion compensation is allowed to be performed on the target point cloud frame includes:
decoding first indication information in the bitstream in a case that the second indication information indicates that motion compensation is allowed to be performed on the target point cloud frame and the third indication information indicates that inter-frame prediction is allowed to be performed on the target point cloud slice.

In an implementation, the decoding second indication information in the bitstream includes:

decoding fourth indication information in the bitstream, where the fourth indication information is used for indicating whether inter-frame prediction is allowed to be performed on the target point cloud frame;
decoding fifth indication information in the bitstream, where the fifth indication information is used for indicating whether motion compensation is allowed to be performed on the to-be-decoded point cloud; and
decoding second indication information in the bitstream in a case that the fourth indication information indicates that inter-frame prediction is allowed to be performed on the target point cloud frame and the fifth indication information indicates that motion compensation is allowed to be performed on the to-be-decoded point cloud.

In an implementation, the decoding fourth indication information in the bitstream includes: decoding fourth indication information in the bitstream in a case that sixth indication information in the bitstream indicates that inter-frame prediction is allowed to be performed on the to-be-decoded point cloud.

Alternatively,
The decoding fifth indication information in the bitstream includes: decoding fifth indication information in the bitstream in a case that sixth indication information in the bitstream indicates that inter-frame prediction is allowed to be performed on the to-be-decoded point cloud.

The sixth indication information is used for indicating whether inter-frame prediction is allowed to be performed on the to-be-decoded point cloud.

In an implementation, the decoding third indication information in the bitstream includes:

decoding third indication information in the bitstream in a case that fourth indication information in the bitstream indicates that inter-frame prediction is allowed to be performed on the target point cloud frame, where the fourth indication information is used for indicating whether inter-frame prediction is allowed to be performed on the target point cloud frame.

In an implementation, before the performing, in a case that it is determined that motion compensation is enabled for a target point cloud slice, motion compensation on a reference point cloud slice corresponding to the target point cloud slice, the method further includes:

performing motion compensation on a reference point cloud frame corresponding to the target point cloud frame in a case that it is determined that motion compensation is enabled for the target point cloud frame, to obtain a compensated reference point cloud frame; and
determining a reference point cloud slice corresponding to the target point cloud slice based on the compensated reference point cloud frame.

In an implementation, the decoding first indication information in a bitstream includes:

decoding seventh indication information in the bitstream, where the seventh indication information is used for indicating whether inter-frame prediction is allowed to be performed on the target point cloud frame; and
decoding first indication information in the bitstream in a case that the seventh indication information indicates that inter-frame prediction is allowed to be performed on the target point cloud frame.

In an implementation, the decoding first indication information in a bitstream further includes:
decoding eighth indication information in the bitstream, where the eighth indication information is used for indicating whether motion compensation is allowed to be performed on the to-be-decoded point cloud.
The decoding first indication information in the bitstream in a case that the seventh indication information indicates that inter-frame prediction is allowed to be performed on the target point cloud frame includes:
decoding first indication information in the bitstream in a case that the eighth indication information indicates that motion compensation is allowed to be performed on the to-be-decoded point cloud and the seventh indication information indicates that inter-frame prediction is allowed to be performed on the target point cloud frame.
In an implementation, before the performing motion compensation on a reference point cloud frame corresponding to the target point cloud frame, the method further includes:

decoding ninth indication information in the bitstream, where the ninth indication information is used for indicating whether motion compensation is enabled for the target point cloud frame; and
determining, based on the ninth indication information, whether motion compensation is enabled for the target point cloud frame.

In an implementation, the decoding ninth indication information in the bitstream includes:
decoding ninth indication information in the bitstream in a case that seventh indication information in the bitstream indicates that inter-frame prediction is performed on the target point cloud frame and eighth indication information in the bitstream indicates that motion compensation is allowed to be performed on the to-be-decoded point cloud.
The seventh indication information is used for indicating whether to perform inter-frame prediction on the target point cloud frame. The eighth indication information is used for indicating whether to allow to perform motion compensation on the to-be-decoded point cloud.
It should be noted that motion compensation in the foregoing implementation may be global motion compensation, local motion compensation, or another type of motion compensation.
Optionally, the performing, in a case that it is determined that motion compensation is enabled for a target point cloud slice, motion compensation on a reference point cloud slice corresponding to the target point cloud slice, to obtain a compensated reference point cloud slice includes:
performing, in a case that it is determined that global motion compensation is enabled for the target point cloud slice, global motion compensation on a reference point cloud slice corresponding to the target point cloud slice, to obtain a compensated reference point cloud slice.
Optionally, before the performing, in a case that it is determined that motion compensation is enabled for a target point cloud slice, motion compensation on a reference point cloud slice corresponding to the target point cloud slice, the method further includes:

decoding first indication information in a bitstream, where the first indication information is used for indicating whether global motion compensation is enabled for the target point cloud slice; and
determining, based on the first indication information, whether global motion compensation is enabled for the target point cloud slice.

Optionally, the decoding first indication information in a bitstream includes:

decoding second indication information in the bitstream, where the second indication information is used for indicating whether global motion compensation is allowed to be performed on the target point cloud frame; and
decoding first indication information in the bitstream in a case that the second indication information indicates that global motion compensation is allowed to be performed on the target point cloud frame.

Optionally, the decoding first indication information in a bitstream further includes:
decoding third indication information in the bitstream, where the third indication information is used for indicating whether inter-frame prediction is allowed to be performed on the target point cloud slice.
The decoding first indication information in the bitstream in a case that the second indication information indicates that global motion compensation is allowed to be performed on the target point cloud frame includes:
decoding first indication information in the bitstream in a case that the second indication information indicates that global motion compensation is allowed to be performed on the target point cloud frame and the third indication information indicates that inter-frame prediction is allowed to be performed on the target point cloud slice.
Optionally, the decoding second indication information in the bitstream includes:

decoding fourth indication information in the bitstream, where the fourth indication information is used for indicating whether inter-frame prediction is allowed to be performed on the target point cloud frame;
decoding fifth indication information in the bitstream, where the fifth indication information is used for indicating whether global motion compensation is allowed to be performed on the to-be-decoded point cloud; and
decoding second indication information in the bitstream in a case that the fourth indication information indicates that inter-frame prediction is allowed to be performed on the target point cloud frame and the fifth indication information indicates that global motion compensation is allowed to be performed on the to-be-decoded point cloud.

Optionally, the decoding fourth indication information in the bitstream includes: decoding fourth indication information in the bitstream in a case that sixth indication information in the bitstream indicates that inter-frame prediction is allowed to be performed on the to-be-decoded point cloud.
Alternatively,
The decoding fifth indication information in the bitstream includes: decoding fifth indication information in the bitstream in a case that sixth indication information in the bitstream indicates that inter-frame prediction is allowed to be performed on the to-be-decoded point cloud.
The sixth indication information is used for indicating whether inter-frame prediction is allowed to be performed on the to-be-decoded point cloud.
Optionally, the decoding third indication information in the bitstream includes:
decoding third indication information in the bitstream in a case that fourth indication information in the bitstream indicates that inter-frame prediction is allowed to be performed on the target point cloud frame, where the fourth indication information is used for indicating whether inter-frame prediction is allowed to be performed on the target point cloud frame.
Optionally, before the performing, in a case that it is determined that motion compensation is enabled for a target point cloud slice, motion compensation on a reference point cloud slice corresponding to the target point cloud slice, the method further includes:

performing global motion compensation on a reference point cloud frame corresponding to the target point cloud frame in a case that it is determined that global motion compensation is enabled for the target point cloud frame, to obtain a compensated reference point cloud frame; and
determining a reference point cloud slice corresponding to the target point cloud slice based on the compensated reference point cloud frame.

Optionally, the decoding first indication information in a bitstream includes:

decoding seventh indication information in the bitstream, where the seventh indication information is used for indicating whether inter-frame prediction is allowed to be performed on the target point cloud frame; and
decoding first indication information in the bitstream in a case that the seventh indication information indicates that inter-frame prediction is allowed to be performed on the target point cloud frame.

Optionally, the decoding first indication information in a bitstream further includes:

decoding eighth indication information in the bitstream, where the eighth indication information is used for indicating whether global motion compensation is allowed to be performed on the to-be-decoded point cloud.

The decoding first indication information in the bitstream in a case that the seventh indication information indicates that inter-frame prediction is allowed to be performed on the target point cloud frame includes: decoding first indication information in the bitstream in a case that the eighth indication information indicates that global motion compensation is allowed to be performed on the to-be-decoded point cloud and the seventh indication information indicates that inter-frame prediction is allowed to be performed on the target point cloud frame.

Optionally, before the performing global motion compensation on a reference point cloud frame corresponding to the target point cloud frame, the method further includes:

decoding ninth indication information in the bitstream, where the ninth indication information is used for indicating whether global motion compensation is enabled for the target point cloud frame; and
determining, based on the ninth indication information, whether global motion compensation is enabled for the target point cloud frame.

Optionally, the decoding ninth indication information in the bitstream includes:
decoding ninth indication information in the bitstream in a case that seventh indication information in the bitstream indicates that inter-frame prediction is performed on the target point cloud frame and eighth indication information in the bitstream indicates that global motion compensation is allowed to be performed on the to-be-decoded point cloud.

The seventh indication information is used for indicating whether to perform inter-frame prediction on the target point cloud frame. The eighth indication information is used for indicating whether to allow to perform global motion compensation on the to-be-decoded point cloud.

Optionally, the performing global motion compensation on a reference point cloud frame corresponding to the target point cloud frame, to obtain a compensated reference point cloud frame includes:

decoding tenth indication information in the bitstream, to obtain a global motion compensation matrix corresponding to the target point cloud frame, where the tenth indication information is used for indicating the global motion compensation matrix; and
performing, based on the global motion compensation matrix, global motion compensation on a reference point cloud frame corresponding to the target point cloud frame, to obtain a compensated reference point cloud frame.

It should be noted that this embodiment is used as an implementation on a decoding side corresponding to the embodiment shown in FIG. 13. For a specific implementation, refer to related descriptions of the embodiment shown in FIG. 13. To avoid repeated descriptions, details are not described in this embodiment again, and the same beneficial effect can be achieved.

The point cloud encoding and decoding methods are described below by using specific embodiments:

Embodiment 1:

Encoder side:

In the following steps, each bool variable may use false or true to indicate that the enable flag is enabled, and in the following descriptions, true indicates that the enable flag is enabled:
Step (11): Determine and encode a sequence parameter set (Sequence Paramater Set, sps) parameter.

An sps layer inter-frame prediction enable flag is set and a value is determined. The flag is a bool (bool)-type variable and indicates whether inter-frame prediction is allowed to be performed on a to-be-encoded point cloud sequence. For example, this may be represented by sps_inter_frame_prediction_enabled_flag.

An sps layer global motion enable flag is set and a value is determined. The flag is a bool-type variable and indicates whether global motion compensation is allowed to be performed on the to-be-encoded point cloud sequence. For example, this may be represented by sps_globalMotionEnabled.

The sps layer inter-frame prediction enable flag sps_inter_frame_prediction_enabled_flag is encoded. If sps_inter_frame_prediction_enabled_flag is false, the sps layer global motion enable flag sps_globalMotionEnable does not need to be encoded, and is set to false in a subsequent determining. Otherwise, the value thereof needs to be determined and encoded.

Step (12): Determine and encode a geometry parameter set (Geometry Paramater Set, gps) parameter.

A gps layer inter-frame prediction enable flag is set and a value is determined. The flag is a bool-type variable and indicates whether inter-frame prediction is allowed to be performed on a to-be-encoded point cloud. For example, this may be represented by gps_inter_frame_prediction_enabled_flag.

A gps layer global motion enable flag is set and a value is determined. The flag is a bool-type variable and indicates whether global motion compensation is allowed to be performed on the to-be-encoded point cloud. For example, this may be represented by gps_globalMotionEnabled.

A gps layer local motion enable flag is set and a value is determined. The flag is a bool-type variable and indicates whether local motion compensation is allowed to be performed on the to-be-encoded point cloud. For example, this may be represented by gps_localMotionEnabled.

If sps_inter_frame_prediction_enabled_flag is false, gps_inter_frame_prediction_enabled_flag does not need to be encoded. Otherwise, a value thereof needs to be determined and encoded. If gps_inter_frame_prediction_enabled_flag or sps_globalMotionEnable is false, gps_globalMotionEnabled does not need to be encoded and is set to false in a subsequent determining. Otherwise, a value thereof needs to be determined and encoded. If gps_inter_frame_prediction_enabled_flag, gps_localMotionEnable does not need to be encoded and is set to false in a subsequent determining. Otherwise, a value thereof needs to be determined and encoded.

Step (13): Encode a geometry data unit (Geometry Data Unit, GDU) parameter.

A slice layer inter-frame prediction enable flag is set and a value is determined. The flag is a bool-type variable and indicates whether inter-frame prediction may be performed on a to-be-encoded slice. For example, this may be represented by gbh_interPredictionEnabledFlag.

A slice layer global motion enable flag is set and a value is determined. The flag is a bool-type variable and indicates whether global motion compensation is performed on the to-be-encoded slice. For example, the flag may be represented by gbh_globalMotionEnabled.

A slice layer global motion matrix variable is set, for example, to be represented by gbh_gm_matrix. A slice layer global motion translation vector variable is set, for example, to be represented by gbh_gm_trans. The two variables are used for compensating a reference slice.

If gps_inter_frame_prediction_enabled_flag is false, gbh_interPredictionEnabledFlag does not need to be encoded and is set to false in a subsequent process, and a value thereof needs to be determined and encoded. If gps_globalMotionEnabled or gbh_interPredictionEnabledFlag is false, a value of gbh_globalMotionEnabled is false and does not need to be encoded. Otherwise, a value thereof needs to be determined and encoded. If gbh_globalMotionEnabled is false, the global motion rotation matrix and the translation vector do not need to be encoded. Otherwise, values of the global motion rotation matrix gbh_gm_matrix and the translation vector gbh_gm_trans need to be determined and encoded.

Step (14): Obtain and utilize a global motion compensation matrix.

If global motion compensation is enabled for a current to-be-encoded slice, a global motion compensation matrix needs to be calculated and encoded. The global motion compensation matrix may be calculated according to a reference slice and a current slice by using an LMS algorithm, and the obtained global motion compensation matrix is encoded in a geometry data unit (GDU). The reference slice is compensated by using the global motion compensation matrix to obtain a compensated reference slice. Global motion compensation is performed on the reference slice to obtain a compensated reference slice (compensation point (X, Y, Z) obtained after rotation and translation of all points (X', Y', Z') in the reference slice, and all compensation points form the compensated reference slice). A calculation formula is as follows:

$$\begin{bmatrix} X' \\ Y' \\ Z' \end{bmatrix} = \begin{bmatrix} * * * \\ * * * \\ * * * \end{bmatrix} \begin{bmatrix} X \\ Y \\ Z \end{bmatrix} + \begin{bmatrix} Vx \\ Vy \\ Vz \end{bmatrix}$$

where $\begin{bmatrix} * * * \\ * * * \\ * * * \end{bmatrix}$ is the rotation matrix, and $\begin{bmatrix} Vx \\ Vy \\ Vz \end{bmatrix}$ is the translation vector.

Step (15): Local motion compensation.

A PU (prediction unit) is a block obtained by partitioning a to-be-encoded point cloud frame (or slice) based on a rule. For example, a PU obtained by splitting based on an octree is an octree node.

The PU is set to a processing unit for performing local motion compensation on the to-be-encoded point cloud frame (or slice).

A minimum PU side length should be greater than a minimum voxel side length obtained by partitioning the to-be-encoded point cloud frame (or slice) based on a rule. In this case, an edge length of the PU may be represented by min_PU_size. In the following description, minPU is used for representing that when a size of a node into which a to-be-encoded point cloud frame (or slice) is partitioned based on a rule is equal to min_PU_size, the node is referred to as minPU.

An LPU is set as a maximum processing unit for performing local motion compensation on the to-be-encoded point cloud frame (or slice), and a side length thereof is less than or equal to a side length of the to-be-encoded point cloud frame (or slice) when not partitioned.

If local motion compensation is enabled, the reference slice needs to be partitioned to obtain a reference node.

When the reference slice is selected, if global motion compensation is performed on the reference slice, the reference slice on which global motion compensation has been performed is selected as the reference slice. Otherwise, the reference slice on which global motion compensation has not been performed is selected as the reference slice.

Before encoding an occupancy of a to-be-encoded node, whether local motion compensation needs to be performed on the reference node needs to be determined, a reference node on which local motion compensation or local motion compensation has not been performed is obtained according to the determining, and prediction information is generated according to the reference node as context information of the occupancy of the to-be-encoded node. Determining whether local motion compensation needs to be performed on the reference node is performed in the following three cases:

(1) If a node obtained by means of multi-cross splitting is an LPU:

Whether local motion compensation needs to be performed on a reference node $LPU_{ref}$ of a current LPU is performed, for example, according to whether the quantity of points in the reference node $LPU_{ref}$ of the LPU is greater than threshold th. If the quantity is greater than th, local motion compensation needs to be performed on $LPU_{ref}$. Otherwise, local motion compensation does not need to be performed on $LPU_{ref}$.

A flag of whether the LPU needs to be split is set. For example, the flag is indicated by using split_flag, where split_flag being 0 or 1 may be used for indicating that the LPU needs to be split. Herein, split_flag=1 indicates that the LPU needs to be split.

A variable is set to perform local motion compensation on a reference node. For example, the variable is represented by using a motion vector $MV_{LPU}$.

When local motion compensation needs to be performed on the reference node $LPU_{ref}$ of the LPU, a value of split_flag needs to be determined and encoded.

If split_flag=0, the LPU is not split, and in this case, the motion vector $MV_{LPU}$ needs to be encoded. According to $MV_{LPU}$, $LPU_{ref}$ is compensated, and a point in $LPU_{ref}$ is flagged to be compensated. A compensated reference node is used for obtaining prediction information as a context for encoding an occupancy of a current node.

If split_flag=1, the LPU is split, split_flags=1 is encoded, and a non-compensated reference node is used for obtaining prediction information as a context for encoding an occupancy of a current node.

(2) If a node obtained by means of multi-cross splitting is a PU:

(a) If a point in a reference node $PU_{ref}$ of a current node PU needs to be compensated but is not compensated:

If the PU is minPU, split_flags does not need to be encoded, and split_flags is inferred as 0.

If the PU is not minPU, split_flags needs to be encoded.

If split_flags=0, the PU is not split, and in this case, $MV_{PU}$ is encoded. According to $MV_{PU}$, $PU_{ref}$ is compensated, and a point in $PU_{ref}$ is flagged to be compensated. A compensated reference node is used for obtaining prediction information as a context for encoding an occupancy of a current node.

If split_flags=1, the PU is split, and a non-compensated reference node is used for obtaining prediction information as a context for encoding an occupancy of a current node.

(b) If a point in a reference node $PU_{ref}$ of a current node PU needs to be compensated and has been compensated:

A compensated reference node is used for obtaining prediction information as a context for encoding an occupancy of a current node.

(c) If a point in a reference node $PU_{ref}$ of a current node PU does not need to be compensated:

A non-compensated reference node is used for obtaining prediction information as a context for encoding an occupancy of a current node.

(3): If a node obtained by means of multi-way splitting is not a PU (or an LPU):

Whether a reference node $node_{ref}$ is compensated is determined. If $node_{ref}$ is compensated, a compensated reference frame is used for obtaining prediction information as a context for encoding an occupancy of a current node. Otherwise, a non-compensated reference node is used for obtaining prediction information as a context for encoding an occupancy of a current node.

Step (16): Obtain and utilize inter-frame information.

When inter-frame prediction is enabled and a current frame (or slice) is encoded, the current frame (or slice) is encoded by using inter-frame information.

The inter-frame information may be reference node information obtained by multi-way partitioning of a reference frame. When an occupancy obtained by multi-way tree partitioning of a current frame (or slice) is encoded, the occupancy is encoded by using the reference node information.

The reference node information may be point quantity information of a reference node. A variable predOccupancy [i] is set to represent whether there is a point in sub-node i of the reference node, and a variable predOccupancyStrong[i] is set to represent whether the quantity of points in sub-node i of the reference node is greater than threshold th. If a reference node of a current to-be-encoded node is $node_{ref}$, there are points in sub-node i (there are eight sub-nodes, where a value of i is 0 to 7) obtained by splitting $node_{ref}$. A variable predOccupancy[i] is set to 1. To be specific, sub-node i of the current to-be-encoded node is predicted to be occupancy. If the quantity of points in sub-node i obtained by splitting $node_{ref}$ is greater than threshold th, predOccupancyStrong[i] is 1. To be specific, sub-node i of the current to-be-encoded node is predicted to be strong occupancy (there is a high possibility that the current frame sub-node i is occupancy).

predOccupancy[i] and predOccupancyStrong[i] may be used as context for encoding whether sub-node i of the to-be-encoded node is occupancy, for example, may be used as inter-frame information for encoding whether sub-node i of the current frame is occupancy and is added to primary information of dynamic OBUF (Optimal Binarization with Update on the Fly) context information.

In the dynamic OBUF, context information includes encoded syntax elements, and may be divided into primary information and secondary information according to importance of information. Part of information in the secondary information is reduced in a dynamic reduction process. When inter-frame prediction is performed, the inter-frame information is added to the primary information of the dynamic OBUF context information. A context obtained after the primary information and the reduced secondary information are combined is used as an input of the OBUF, and is mapped to an encoder for encoding. After a binary syntax element is encoded, a probability value corresponding to the encoder is accordingly updated.

Decoder side:

In the following steps, each bool variable may use false or true to indicate that the enable flag is enabled, and in the following descriptions, true indicates that the enable flag is enabled:

Step (21): Decode a parameter in a sequence parameter set (SPS).

As shown in Table 1, an sps layer inter-frame prediction enable flag sps_inter_frame_prediction_enabled_flag is decoded. If sps_inter_frame_prediction_enabled_flag is true, an sps layer global motion enable flag sps_globalMotionEnable is decoded.

Table 1

| parseSPS(){ |
| --- |
| sps_inter_frame_prediction_enabled_flag |
| if(sps_inter_frame_prediction_enabled_flag){ |
| sps_globalMotionEnable |
| } |

Step (22): Decode a parameter in a geometry parameter set (GPS).

As shown in Table 2, if sps_inter_frame_prediction_enabled_flag is true, a gps layer inter-frame prediction enable flag gps_inter_frame_prediction_enabled_flag is decoded. If gps_inter_frame_prediction_enabled_flag is true, a gps layer global motion enable flag gps_globalMotionEnabled is decoded.

Table 2

| parseGPS() { |
| --- |
| if(sps_inter_frame_prediction_enabled_flag) |
| gps_inter_frame_prediction_enabled_flag |
| if(sps_globalMotionEnable&&gps.inter_frame_prediction_enabled_flag) |
| gps_globalMotionEnabled |
| if(gps.inter_frame_prediction_enabled_flag) |

(continued)

| gps_localMotionEnabled |
| --- |
| } |

Step (23): Decode a parameter in a geometry data unit (GDU).

As shown in Table 3, if gps_inter_frame_prediction_enabled_flag is true, gbh_interPredictionEnabledFlag is decoded.

If gps_globalMotionEnabled and gbh_interPredictionEnabledFlag are both true, gbh_globalMotionEnabled is decoded, and if gbh_globalMotionEnabled is true, a global motion matrix gbh_gm_matrix and a global motion vector gbh_gm_trans are decoded.

Table 3

| parseGDU(){ |
| --- |
| if(gps_inter_frame_prediction_enabled_flag) |
| gbh_interPredictionEnabledFlag |
| if(gps_globalMotionEnabled&&gbh_interPredictionEnabledFlag) |
| gbh_globalMotionEnabled |
| if(gbh_globalMotionEnabled){ |
| for(i = 0; i < 3; i++) |
| for(j = 0; j < 3; j++) |
| gbh_gm_matrix[i][j] |
| for(j = 0; j < 3; j++) |
| gbh_gm_trans[j] |
| } |
| } |

Step (24): Obtain and utilize a global motion compensation matrix.

If global motion compensation is enabled for the slice, a global motion compensation matrix needs to be obtained through decoding. Before the occupancy of the point cloud is decoded, the reference slice is compensated by using the global motion compensation matrix to obtain a compensated reference slice. Global motion compensation is performed on the reference slice to obtain a compensated reference slice (compensation point (X, Y, Z) obtained after rotation and translation of all points (X', Y', Z') in the reference slice, and all compensation points form the compensated reference slice). A calculation formula is as follows:

$$\begin{bmatrix} X' \\ Y' \\ Z' \end{bmatrix} = \begin{bmatrix} *** \\ *** \\ *** \end{bmatrix} \begin{bmatrix} X \\ Y \\ Z \end{bmatrix} + \begin{bmatrix} Vx \\ Vy \\ Vz \end{bmatrix}$$

where $\begin{bmatrix} *** \\ *** \\ *** \end{bmatrix}$ is the rotation matrix, and $\begin{bmatrix} Vx \\ Vy \\ Vz \end{bmatrix}$ is the translation vector.

Step (25): Local motion compensation.

If the local motion compensation is enabled, the reference slice needs to be partitioned to obtain the reference node.

When the reference slice is selected, if global motion compensation is performed on the reference slice, the reference slice on which global motion compensation has been performed is selected as the reference slice. Otherwise, the reference slice on which global motion compensation has not been performed is selected as the reference slice.

Before decoding an occupancy of a to-be-decoded node, whether local motion compensation needs to be performed on the reference node needs to be determined, a reference node on which local motion compensation or local motion compensation has not been performed is obtained according to the determining, and prediction information is generated according to the reference node as context information for decoding the occupancy of the to-be-decoded node. Determining whether local motion compensation needs to be performed on the reference node is performed in the following three cases:

(1) If the to-be-decoded node is an LPU:

Whether local motion compensation needs to be performed on a reference node $LPU_{ref}$ of a current LPU is performed, for example, according to whether the quantity of points in the reference node $LPU_{ref}$ of the LPU is greater than threshold th. If the quantity is greater than th, local motion compensation needs to be performed on $LPU_{ref}$. Otherwise, local motion compensation does not need to be performed on $LPU_{ref}$.

When local motion compensation needs to be performed on the reference node $LPU_{ref}$ of the LPU, a value of split_flag needs to be decoded.

If split_flag=0, the LPU is not split, and in this case, the motion vector $MV_{LPU}$ needs to be decoded. According to $MV_{LPU}$, $LPU_{ref}$ is compensated, and a point in $LPU_{ref}$ is flagged to be compensated. A compensated reference node is used for obtaining prediction information as a context for decoding an occupancy of a current node.

If split_flag=1, the LPU is split, and a non-compensated reference node is used for obtaining prediction information as a context for decoding an occupancy of a current node.

(2) If the to-be-decoded node is a PU:

    (a) If a point in a reference node $PU_{ref}$ of a current node PU needs to be compensated and is not compensated:
    If the PU is minPU, split_flags does not need to be encoded and decoded, and split_flags is inferred as 0.

If the PU is not minPU, split_flags needs to be decoded.

If split_flags=0, the PU is not split.

$MV_{PU}$ is decoded. According to $MV_{PU}$, $PU_{ref}$ is compensated, and a point in $PU_{ref}$ is flagged to be compensated. A compensated reference node is used for obtaining prediction information as a context for decoding an occupancy of a current node.

If split_flags=1, the PU is split, and a non-compensated reference node is used for obtaining prediction information as a context for decoding an occupancy of a current node.

(b) If a point in a reference node $PU_{ref}$ of a current node PU needs to be compensated and has been compensated:
A compensated reference node is used for obtaining prediction information as a context for decoding an occupancy of a current node.

(c) If a point in a reference node $PU_{ref}$ of a current node PU does not need to be compensated:
A non-compensated reference node is used for obtaining prediction information as a context for decoding an occupancy of a current node.

(3): If the to-be-decoded node is not a PU (or an LPU):

Whether a reference node $node_{ref}$ is compensated is determined. If $node_{ref}$ is compensated, a compensated reference node is used for obtaining prediction information as a context for decoding an occupancy of a current node. Otherwise, a non-compensated reference node is used for obtaining prediction information as a context for decoding an occupancy of a current node.

Step (26): Obtain and utilize inter-frame information.

When inter-frame prediction is enabled and a current frame (or slice) is decoded, the current frame (or slice) is decoded by using inter-frame information.

The inter-frame information may be reference node information obtained by multi-way partitioning of a reference frame. When an occupancy obtained by multi-way tree partitioning of a current frame (or slice) is decoded, the occupancy is decoded by using the reference node information.

The reference node information may be point quantity information of a reference node. A variable predOccupancy [i] is set to represent whether there is a point in sub-node i of the reference node, and a variable predOccupancyStrong[i] is set to represent whether the quantity of points in sub-node i of the reference node is greater than threshold th. If a reference node of a current to-be-decoded node is $node_{ref}$, there are points in sub-node i (there are eight sub-nodes, where a value of i is 0 to 7) obtained by splitting $node_{ref}$. A variable predOccupancy[i] is set to 1. To be specific, sub-node i of the current to-be-decoded node is predicted to be occupancy. If the quantity of points in sub-node i obtained by splitting node$_{ref}$ is greater than threshold th, predOccupancyStrong[i] is 1. To be specific, sub-node i of the current to-be-decoded node is predicted to be strong occupancy (there is a high possibility that the current frame sub-node i is occupancy).

predOccupancy[i] and predOccupancyStrong[i] may be used as context for decoding whether sub-node i of the to-be-decoded node is occupancy, for example, may be used as inter-frame information for decoding whether sub-node i of the current frame is occupancy and is added to primary information of dynamic optimal binarization with update on the fly (Optimal Binarization with Update on the Fly, OBUF) context information.

In the dynamic OBUF, context information includes decoded syntax elements, and may be divided into primary information and secondary information according to importance of information. Part of information in the secondary information is reduced in a dynamic reduction process. When inter-frame prediction is performed, the inter-frame information is added to the primary information of the dynamic OBUF context information. A context obtained after the primary information and the reduced secondary information are combined is used as an input of the OBUF, and is mapped to a decoder for decoding. After a binary syntax element is decoded, a probability value corresponding to the decoder is accordingly updated.

Embodiment 2:

Encoder side

Step (31): Determine and encode a sequence parameter set (sps) parameter.

An sps layer inter-frame prediction enable flag is set and a value is determined. The flag is a bool-type variable and indicates whether inter-frame prediction is allowed to be performed on a to-be-encoded point cloud sequence. For example, this may be represented by sps_inter_frame_prediction_enabled_flag.

An sps layer global motion enable flag is set and a value is determined. The flag is a bool-type variable and indicates whether global motion compensation is allowed to be performed on the to-be-encoded point cloud sequence. For example, this may be represented by sps_globalMotionEnabled.

The sps layer inter-frame prediction enable flag sps_inter_frame prediction enabled flag is encoded. If sps_inter_frame_prediction_enabled_flag is false, the sps layer global motion enable flag sps_globalMotionEnable does not need to be encoded, and is set to false in a subsequent determining. Otherwise, the value thereof needs to be determined and encoded.

Step (32): Determine and encode a geometry parameter set (gps) parameter.

A gps layer inter-frame prediction enable flag is set and a value is determined. The flag is a bool-type variable and indicates whether inter-frame prediction is allowed to be performed on a to-be-encoded point cloud. For example, this may be represented by gps_inter_frame_prediction_enabled_flag.

A gps layer inter-frame prediction flag is set and a value is determined. The flag is a bool-type variable and indicates whether inter-frame prediction may be performed on a to-be-encoded point cloud (for example, when the current frame is an independent frame (an I frame), inter-frame prediction cannot be performed). For example, this may be represented by frame_inter_prediction.

A gps layer global motion enable flag is set and a value is determined. The flag is a bool-type variable and indicates whether global motion compensation is allowed to be performed on the to-be-encoded point cloud. For example, this may be represented by gps_globalMotionEnabled.

A gps layer local motion enable flag is set and a value is determined. The flag is a bool-type variable and indicates whether local motion compensation is allowed to be performed on the to-be-encoded point cloud. For example, this may be represented by gps_localMotionEnabled.

If sps_inter_frame_prediction_enabled_flag is false, gps_inter_frame_prediction_enabled_flag does not need to be encoded. Otherwise, a value thereof needs to be determined and encoded.

If gps_inter_frame_prediction_enabled_flag is false, frame_inter_prediction does not need to be encoded and false is set in a subsequent determining. Otherwise, a value thereof needs to be determined and encoded.

If frame_inter_prediction or sps_globalMotionEnable is false, gps_globalMotionEnabled does not need to be encoded and false is set in a subsequent determining. Otherwise, a value thereof needs to be determined and encoded. If gps_globalMotionEnabled is true, values of the global motion rotation matrix gps_gm_matrix and the translation vector gps_gm_trans need to be determined and encoded.

Step (33): Obtain and utilize a global motion compensation matrix.

If gps.globalMotionEnabled is true, global motion compensation needs to be performed on the reference frame. The global motion compensation matrix may be used for compensating the reference frame. The global motion compensation matrix may be calculated according to the reference frame and the current frame by using an LMS algorithm, and the obtained global motion compensation matrix is encoded on a gps layer. The reference frame is compensated by using the global motion compensation matrix to obtain a compensated reference frame. Global motion compensation is performed on the reference frame to obtain a compensated reference frame (compensation point (X, Y, Z) obtained after rotation and translation of all points (X', Y', Z') in the reference frame, and all compensation points form the compensated reference frame). A calculation formula is as follows:

$$\begin{bmatrix} X' \\ Y' \\ Z' \end{bmatrix} = \begin{bmatrix} *** \\ *** \\ *** \end{bmatrix} \begin{bmatrix} X \\ Y \\ Z \end{bmatrix} + \begin{bmatrix} Vx \\ Vy \\ Vz \end{bmatrix}$$

where $\begin{bmatrix} *** \\ *** \\ *** \end{bmatrix}$ is the rotation matrix, and $\begin{bmatrix} Vx \\ Vy \\ Vz \end{bmatrix}$ is the translation vector.

Step (34): Encode a parameter in a geometry data unit (GDU).

A slice layer global motion enable flag is set and a value is determined. The flag is a bool-type variable and indicates whether global motion compensation is performed on the to-be-encoded slice. For example, the flag may be represented by gbh_globalMotionEnabled.

A slice layer global motion matrix variable is set, for example, to be represented by gbh_gm_matrix. A slice layer global motion translation vector variable is set, for example, to be represented by gbh_gm_trans. The two variables are used for compensating a reference slice.

If frame_inter_prediction or sps_globalMotionEnable is false, gbh_globalMotionEnabled does not need to be encoded and is set to false in a subsequent process. Otherwise, a value thereof needs to be determined and encoded. If gbh_globalMotionEnabled is false, the global motion rotation matrix gbh.gm_matrix and the translation vector gbh.gm_trans do not need to be encoded. Otherwise, values of the global motion rotation matrix gbh_gm_matrix and the translation vector gbh_gm_trans need to be determined and encoded.

Step (35): Obtain and utilize a global motion compensation matrix.

If global motion compensation is enabled for a current to-be-encoded slice, a global motion compensation matrix needs to be calculated and encoded. The global motion compensation matrix may be calculated according to a reference slice and a current slice by using a least mean square (Least Mean Square) algorithm. When the reference slice is selected, if the reference frame is subjected to global motion compensation, a slice obtained by partitioning the reference frame after global motion compensation is used as the reference slice. Otherwise, a slice obtained by partitioning the reference frame on which global motion compensation has not been performed is used as the reference slice. The obtained global motion compensation matrix is encoded in a geometry data unit (GDU). The reference slice is compensated by using the global motion compensation matrix to obtain a compensated reference slice. Global motion compensation is performed on the reference slice to obtain a compensated reference slice (compensation point (X, Y, Z) obtained after rotation and translation of all points (X', Y', Z') in the reference slice, and all compensation points form the compensated reference slice). A calculation formula is as follows:

$$\begin{bmatrix} X' \\ Y' \\ Z' \end{bmatrix} = \begin{bmatrix} *** \\ *** \\ *** \end{bmatrix} \begin{bmatrix} X \\ Y \\ Z \end{bmatrix} + \begin{bmatrix} Vx \\ Vy \\ Vz \end{bmatrix}$$

where $\begin{bmatrix} *** \\ *** \\ *** \end{bmatrix}$ is the rotation matrix, and $\begin{bmatrix} Vx \\ Vy \\ Vz \end{bmatrix}$ is the translation vector.

Step (36) to step (37) are consistent with step (35) to step (36) of the encoder side in Embodiment 1.

Decoder side:

Step (41): Determine and decode a sequence parameter set (SPS) parameter.

As shown in Table 4, an sps layer inter-frame prediction enable flag sps_inter_frame_prediction_enabled_flag is decoded, and an sps layer global motion enable flag sps_globalMotionEnable is decoded.

Table 4

| parseSPS(){ |
| --- |
| sps_inter_frame_prediction_enabled_flag |

(continued)

| if( sps_inter_frame_prediction_enabled_flag) |
| --- |
| sps_globalMotionEnable |

Step (42): Determine and decode a geometry parameter set (GPS) parameter.

As shown in Table 5, if sps_inter_frame_prediction_enabled_flag is true, a gps layer inter-frame prediction enable flag gps_inter_frame_prediction_enabled_flag is decoded. If gps_inter_frame_prediction_enabled_flag is true, a gps layer inter-frame predictable flag frame_inter_prediction is decoded. If frame_inter_prediction and sps_globalMotionEnable are true, a gps layer global motion enable flag gps_globalMotionEnabled is decoded. If gps_globalMotionEnabled is true, a global motion matrix gps_gm_matrix and a global motion vector gps_gm_trans at a frame level are decoded.

Table 5

| parseGPS(){ |
| --- |
| if( sps_inter_frame_prediction_enabled_flag) |
| gps.inter_frame_prediction_enabled_flag |
| if(gps.inter_frame_prediction_enabled_flag) |
| frame_inter_prediction |
| if(frame_inter_prediction&&sps_globalMotionEnable) { |
| gps_globalMotionEnabled |
| } |
| if(gps_globalMotionEnabled) |
| for(i = 0; i < 3; i++) |
| for(j = 0; j < 3; j++) |
| gps_gm_matrix[i][j] |
| for(j = 0; j < 3; j++) |
| gps_gm_trans[j] |
| } |

Step (43): Obtain and utilize a global motion compensation matrix.

If gps.globalMotionEnabled is true, global motion compensation needs to be performed on the reference frame. The global motion compensation matrix may be used for compensating the reference frame. The global motion compensation matrix is obtained by decoding. Before partitioning the slice, the reference frame is compensated by using the global motion compensation matrix to obtain a compensated reference frame. Global motion compensation is performed on the reference frame to obtain a compensated reference frame (compensation point *(X, Y, Z)* obtained after rotation and translation of all points *(X', Y', Z')*, and all compensation points form the compensated reference frame). A calculation formula is as follows:

$$
\begin{bmatrix} X' \\ Y' \\ Z' \end{bmatrix} = \begin{bmatrix} *** \\ *** \\ *** \end{bmatrix} \begin{bmatrix} X \\ Y \\ Z \end{bmatrix} + \begin{bmatrix} Vx \\ Vy \\ Vz \end{bmatrix}
$$

where $\begin{bmatrix} *** \\ *** \\ *** \end{bmatrix}$ is the rotation matrix, and $\begin{bmatrix} Vx \\ Vy \\ Vz \end{bmatrix}$ is the translation vector.

Step (44): Decode a parameter in a geometry data unit (GDU).

As shown in Table 6, if frame_inter_prediction and sps_globalMotionEnable are both true, gbh_globalMotionEnabled is decoded. If gbh_globalMotionEnabled is true, the global motion matrix gbh_gm_matrix and the global motion vector gbh_gm_trans at a slice level are decoded.

Table 6

| parseGBH(){ |
| --- |
| if(frame_inter_prediction&&sps_globalMotionEnable) |
| gbh_globalMotionEnabled |
| if(gbh_globalMotionEnabled) { |
| for(i = 0; i < 3; i++) |
| for(j = 0; j < 3; j++) |
| gbh_gm_matrix[i][j] |
| for(j = 0; j < 3; j++) |
| gbh_gm_trans[j] |
| } |
| |

Step (45): Obtain and utilize a global motion compensation matrix.

If global motion compensation is enabled for the slice, a global motion compensation matrix needs to be obtained through decoding. Before the occupancy of the point cloud is decoded, the reference slice is compensated by using the global motion compensation matrix to obtain a compensated reference slice. When the reference slice is selected, if the reference frame is subjected to global motion compensation, a slice obtained by partitioning the reference frame after global motion compensation is used as the reference slice. Otherwise, a slice obtained by partitioning the reference frame on which global motion compensation has not been performed is used as the reference slice. Global motion compensation is performed on the reference slice to obtain a compensated reference slice (compensation point (X, Y, Z) obtained after rotation and translation of all points (X', Y', Z') in the reference slice, and all compensation points form the compensated reference slice). A calculation formula is as follows:

$$\begin{bmatrix} X' \\ Y' \\ Z' \end{bmatrix} = \begin{bmatrix} * * * \\ * * * \\ * * * \end{bmatrix} \begin{bmatrix} X \\ Y \\ Z \end{bmatrix} + \begin{bmatrix} Vx \\ Vy \\ Vz \end{bmatrix}$$

where $\begin{bmatrix} * * * \\ * * * \\ * * * \end{bmatrix}$ is the rotation matrix, and $\begin{bmatrix} Vx \\ Vy \\ Vz \end{bmatrix}$ is the translation vector.

Step (36) to step (37) are consistent with step (35) to step (36) of the decoder side in Embodiment 1.

In the related art, a global motion advanced syntax element is not flexible enough, and in a particular scenario, not all partitioned slices need to be subjected to global motion compensation. In addition, because there is only a frame-level global motion enable flag, global motion compensation also needs to be performed on a slice without global motion and motion compensation information needs to be encoded, thereby transmitting redundant information. In the embodiments of this application, inter-frame prediction, global motion, and local motion enable flags are set at a plurality of levels, and a bitstream structure of a to-be-encoded syntax element related to added enable flags is specified, so that syntax elements are more complete, and a more complete inter-frame encoding and decoding process of a point cloud is implemented.

It should be noted that the point cloud encoding method provided in this embodiment of this application may be performed by a point cloud encoding apparatus, or a control module for performing the point cloud encoding method in the point cloud encoding apparatus. A point cloud encoding apparatus provided in an embodiment of this application is described in an embodiment of this application by using an example in which the point cloud encoding apparatus performs the point cloud encoding method.

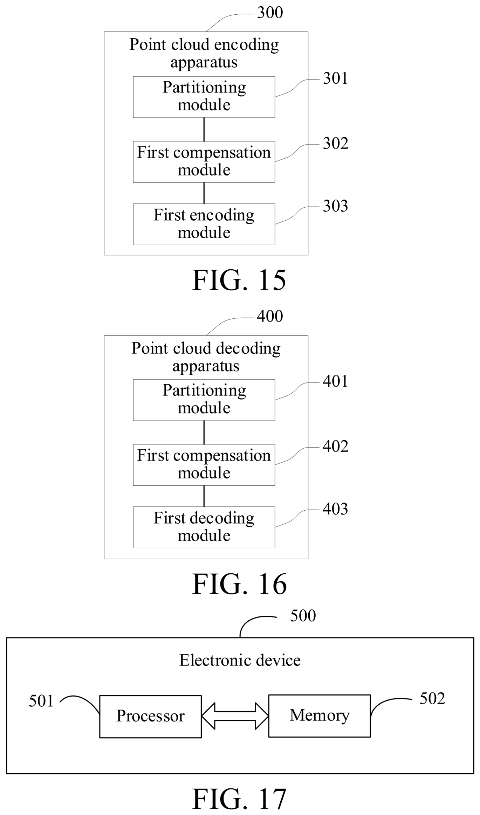

Refer to FIG. 15. FIG. 15 is a structural diagram of a point cloud encoding apparatus according to an embodiment of this application. As shown in FIG. 15, a point cloud encoding apparatus 300 includes:

a partitioning module 301, configured to perform point cloud partitioning processing on a target point cloud frame of a to-be-encoded point cloud to obtain a plurality of point cloud slices;

a first compensation module 302, configured to perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and
a first encoding module 303, configured to perform inter-frame prediction encoding on the target point cloud slice based on the compensated reference point cloud slice.

Optionally, the first motion compensation condition includes a global motion compensation condition. The first compensation module is specifically configured to:
perform, in a case that it is determined that a target point cloud slice satisfies the global motion compensation condition, global motion compensation on a reference point cloud slice corresponding to the target point cloud slice, to obtain a compensated reference point cloud slice.

Optionally, the apparatus further includes:
a second encoding module, configured to encode first indication information, where the first indication information is used for indicating whether global motion compensation is enabled for the target point cloud slice, and a bitstream corresponding to the to-be-encoded point cloud includes an encoding result of the first indication information.

In a case that global motion compensation is performed on a reference point cloud slice corresponding to the target point cloud slice, the first indication information indicates that global motion compensation is enabled for the target point cloud slice.

Optionally, the second encoding module includes:

a first encoding unit, configured to encode second indication information, where the second indication information is used for indicating whether global motion compensation is allowed to be performed on the target point cloud frame, and the bitstream further includes an encoding result of the second indication information; and
a second encoding unit, configured to encode the first indication information in a case that the second indication information indicates that global motion compensation is allowed to be performed on the target point cloud frame.

Optionally, the second encoding module further includes:
a third encoding unit, configured to encode third indication information, where the third indication information is used for indicating whether inter-frame prediction is allowed to be performed on the target point cloud slice, and the bitstream further includes an encoding result of the third indication information.

The second encoding unit is specifically configured to:
encode the first indication information in a case that the second indication information indicates that global motion compensation is allowed to be performed on the target point cloud frame and the third indication information indicates that inter-frame prediction is allowed to be performed on the target point cloud slice.

Optionally, the first encoding unit includes:

a first encoding subunit, configured to encode fourth indication information, where the fourth indication information is used for indicating whether inter-frame prediction is allowed to be performed on the target point cloud frame, and the bitstream further includes an encoding result of the fourth indication information;
a second encoding subunit, configured to encode fifth indication information, where the fifth indication information is used for indicating whether global motion compensation is allowed to be performed on the to-be-encoded point cloud, and the bitstream further includes an encoding result of the fifth indication information; and
a third encoding subunit, configured to encode the second indication information in a case that the fourth indication information indicates that inter-frame prediction is allowed to be performed on the target point cloud frame and the fifth indication information indicates that global motion compensation is allowed to be performed on the to-be-encoded point cloud.

Optionally, the bitstream further includes an encoding result of sixth indication information. The sixth indication information is used for indicating whether inter-frame prediction is allowed to be performed on the to-be-encoded point cloud.

The first encoding subunit is specifically configured to encode fourth indication information in a case that the sixth indication information indicates that inter-frame prediction is allowed to be performed on the to-be-encoded point cloud.

Alternatively,
The second encoding subunit is specifically configured to encode fifth indication information in a case that the sixth indication information indicates that inter-frame prediction is allowed to be performed on the to-be-encoded point cloud.

Optionally, the bitstream further includes an encoding result of fourth indication information. The fourth indication information is used for indicating whether inter-frame prediction is allowed to be performed on the target point cloud frame.
The third encoding unit is specifically configured to:
encode third indication information in a case that the fourth indication information indicates that inter-frame prediction is allowed to be performed on the target point cloud frame.

Optionally, the apparatus further includes:

a second compensation module, configured to perform global motion compensation on a reference point cloud frame corresponding to the target point cloud frame in a case that it is determined that the target point cloud frame satisfies a second motion compensation condition, to obtain a compensated reference point cloud frame; and
a determining module, configured to determine a reference point cloud slice corresponding to the target point cloud slice based on the compensated reference point cloud frame.

Optionally, the second encoding module includes:

a fourth encoding unit, configured to encode seventh indication information, where the seventh indication information is used for indicating whether inter-frame prediction is allowed to be performed on the target point cloud frame, and the bitstream further includes an encoding result of the seventh indication information; and
a fifth encoding unit, configured to encode the first indication information in a case that the seventh indication information indicates that inter-frame prediction is allowed to be performed on the target point cloud frame.

Optionally, the second encoding module further includes:
a sixth encoding unit, configured to encode eighth indication information, where the eighth indication information is used for indicating whether global motion compensation is allowed to be performed on the to-be-encoded point cloud, and the bitstream further includes an encoding result of the eighth indication information.
The fifth encoding unit is specifically configured to:
encode the first indication information in a case that the eighth indication information indicates that global motion compensation is allowed to be performed on the to-be-encoded point cloud and the seventh indication information indicates that inter-frame prediction is allowed to be performed on the target point cloud frame.
Optionally, the apparatus further includes:
a third encoding module, configured to encode ninth indication information, where the ninth indication information is used for indicating whether global motion compensation is enabled for the target point cloud frame.
In a case that global motion compensation is performed on a reference point cloud frame corresponding to the target point cloud frame, the ninth indication information indicates that global motion compensation is enabled for the target point cloud frame.
Optionally, the bitstream further includes an encoding result of seventh indication information and an encoding result of eighth indication information. The seventh indication information is used for indicating whether to perform inter-frame prediction on the target point cloud frame. The eighth indication information is used for indicating whether to allow to perform global motion compensation on the to-be-encoded point cloud.
The third encoding module is specifically configured to:
encode ninth indication information in a case that the seventh indication information indicates that inter-frame prediction is performed on the target point cloud frame and the eighth indication information indicates that global motion compensation is allowed to be performed on the to-be-encoded point cloud.
Optionally, the second compensation module is specifically configured to:

determine a global motion compensation matrix corresponding to the target point cloud frame; and
perform, based on the global motion compensation matrix, global motion compensation on a reference point cloud frame corresponding to the target point cloud frame, to obtain a compensated reference point cloud frame.

The bitstream further includes an encoding result of tenth indication information. The tenth indication information is used for indicating the global motion compensation matrix.
The point cloud encoding apparatus in this embodiment of this application may be an apparatus, an apparatus or electronic device having an operating system, or a component, an integrated circuit or a chip in a terminal. The apparatus or electronic device may be a mobile terminal or a non-mobile terminal. By way of example, the mobile terminal may include, but is not limited to, types of the terminal listed above. The non-mobile terminal may be a server, a network attached storage (Network Attached Storage, NAS), a personal computer (personal computer, PC), a television (television, TV), an automated teller machine or self-service kiosk, or the like. This is not specifically limited in this embodiment of this application.
The point cloud encoding apparatus provided in this embodiment of this application can implement the processes implemented in the method embodiment in FIG. 13, and the same technical effect can be achieved. To avoid repetition, details are not described herein again.
It should be noted that the point cloud decoding method provided in this embodiment of this application may be performed by a point cloud decoding apparatus, or a control module for performing the point cloud decoding method in the point cloud decoding apparatus. A point cloud decoding apparatus provided in an embodiment of this application is described in an embodiment of this application by using an example in which the point cloud decoding apparatus performs a mesh decoding method.

Refer to FIG. 16. FIG. 16 is a structural diagram of a point cloud decoding apparatus according to an embodiment of this application. As shown in FIG. 16, a point cloud decoding apparatus 400 includes:

a partitioning module 401, configured to perform point cloud partitioning processing on a target point cloud frame of a to-be-decoded point cloud to obtain a plurality of point cloud slices;

a first compensation module 402, configured to perform, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices; and

a first decoding module 403, configured to perform inter-frame prediction decoding on the target point cloud slice based on the compensated reference point cloud slice.

Optionally, in a case that it is determined that motion compensation is enabled for a target point cloud slice, the first compensation module is specifically configured to:

perform, in a case that it is determined that global motion compensation is enabled for the target point cloud slice, global motion compensation on a reference point cloud slice corresponding to the target point cloud slice, to obtain a compensated reference point cloud slice.

Optionally, the apparatus further includes:

a second decoding module, configured to: decode first indication information in a bitstream, where the first indication information is used for indicating whether global motion compensation is enabled for the target point cloud slice; and determine, based on the first indication information, whether global motion compensation is enabled for the target point cloud slice.

Optionally, the second decoding module includes:

a first decoding unit, configured to decode second indication information in the bitstream, where the second indication information is used for indicating whether global motion compensation is allowed to be performed on the target point cloud frame; and

a second decoding unit, configured to decode first indication information in the bitstream in a case that the second indication information indicates that global motion compensation is allowed to be performed on the target point cloud frame.

Optionally, the second encoding module further includes:

a third decoding unit, configured to decode third indication information in the bitstream, where the third indication information is used for indicating whether inter-frame prediction is allowed to be performed on the target point cloud slice.

The second decoding unit is specifically configured to:

decode first indication information in the bitstream in a case that the second indication information indicates that global motion compensation is allowed to be performed on the target point cloud frame and the third indication information indicates that inter-frame prediction is allowed to be performed on the target point cloud slice.

Optionally, the first decoding unit includes:

a first decoding subunit, configured to decode fourth indication information in the bitstream, where the fourth indication information is used for indicating whether inter-frame prediction is allowed to be performed on the target point cloud frame;

a second decoding subunit, configured to decode fifth indication information in the bitstream, where the fifth indication information is used for indicating whether global motion compensation is allowed to be performed on the to-be-decoded point cloud; and

a third decoding subunit, configured to decode second indication information in the bitstream in a case that the fourth indication information indicates that inter-frame prediction is allowed to be performed on the target point cloud frame and the fifth indication information indicates that global motion compensation is allowed to be performed on the to-be-decoded point cloud.

Optionally, the first decoding subunit is specifically configured to decode fourth indication information in the bitstream in a case that sixth indication information in the bitstream indicates that inter-frame prediction is allowed to be performed on the to-be-decoded point cloud.

Alternatively,

The second decoding subunit is specifically configured to decode fifth indication information in the bitstream in a case that sixth indication information in the bitstream indicates that inter-frame prediction is allowed to be performed on the to-be-decoded point cloud.

The sixth indication information is used for indicating whether inter-frame prediction is allowed to be performed on the to-be-decoded point cloud.

Optionally, the third decoding unit is specifically configured to:

decode third indication information in the bitstream in a case that fourth indication information in the bitstream indicates that inter-frame prediction is allowed to be performed on the target point cloud frame, where the fourth indication information is used for indicating whether inter-frame prediction is allowed to be performed on the target point cloud frame.

Optionally, the apparatus further includes:

a second compensation module, configured to perform global motion compensation on a reference point cloud frame corresponding to the target point cloud frame in a case that it is determined that global motion compensation is enabled for the target point cloud frame, to obtain a compensated reference point cloud frame; and

a first determining module, configured to determine a reference point cloud slice corresponding to the target point cloud slice based on the compensated reference point cloud frame.

Optionally, the second decoding module includes:

a fourth decoding unit, configured to decode seventh indication information in the bitstream, where the seventh indication information is used for indicating whether inter-frame prediction is allowed to be performed on the target point cloud frame; and

a fifth decoding unit, configured to decode first indication information in the bitstream in a case that the seventh indication information indicates that inter-frame prediction is allowed to be performed on the target point cloud frame.

Optionally, the second decoding module further includes:

a sixth decoding unit, configured to decode eighth indication information in the bitstream, where the eighth indication information is used for indicating whether global motion compensation is allowed to be performed on the to-be-decoded point cloud.

The fifth decoding unit is specifically configured to:

decode first indication information in the bitstream in a case that the eighth indication information indicates that global motion compensation is allowed to be performed on the to-be-decoded point cloud and the seventh indication information indicates that inter-frame prediction is allowed to be performed on the target point cloud frame.

Optionally, the apparatus further includes:

a third decoding module, configured to decode ninth indication information in the bitstream, where the ninth indication information is used for indicating whether global motion compensation is enabled for the target point cloud frame; and

a second determining module, configured to determine, based on the ninth indication information, whether global motion compensation is enabled for the target point cloud frame.

Optionally, the third decoding module is specifically configured to decode ninth indication information in the bitstream in a case that seventh indication information in the bitstream indicates that inter-frame prediction is performed on the target point cloud frame and eighth indication information in the bitstream indicates that global motion compensation is allowed to be performed on the to-be-decoded point cloud.

The seventh indication information is used for indicating whether to perform inter-frame prediction on the target point cloud frame. The eighth indication information is used for indicating whether to allow to perform global motion compensation on the to-be-decoded point cloud.

Optionally, the second compensation module is specifically configured to: decode tenth indication information in the bitstream, to obtain a global motion compensation matrix corresponding to the target point cloud frame, where the tenth indication information is used for indicating the global motion compensation matrix; and

perform, based on the global motion compensation matrix, global motion compensation on a reference point cloud frame corresponding to the target point cloud frame, to obtain a compensated reference point cloud frame.

The point cloud decoding apparatus in this embodiment of this application may be an apparatus, an apparatus or electronic device having an operating system, or a component, an integrated circuit or a chip in a terminal. The apparatus or electronic device may be a mobile terminal or a non-mobile terminal. By way of example, the mobile terminal may include, but is not limited to, types of the terminal listed above. The non-mobile terminal may be a server, a network attached storage (Network Attached Storage, NAS), a personal computer (personal computer, PC), a television (television, TV), an automated teller machine or self-service kiosk, or the like. This is not specifically limited in this embodiment of this application.

The point cloud decoding apparatus provided in this embodiment of this application can implement the processes implemented in the method embodiment in FIG. 14, and the same technical effect can be achieved. To avoid repetition, details are not described herein again.

Optionally, as shown in FIG. 17, an embodiment of this application further provides an electronic device 500, including a processor 501 and a memory 502. The memory 502 has a program or instruction executable on the processor 501 therein. For example, when the electronic device 500 is an encoder-side device, the program or instruction, when executed by the processor 501, implements the steps of the foregoing point cloud encoding method embodiment, and the same technical effect can be achieved. If the electronic device 500 is a decoder-side device, the program or instruction, when executed by the processor 501, implements the steps of the foregoing point cloud decoding method embodiment, and the same technical effect can be achieved. To avoid repetition, details are not described herein again.

An embodiment of this application further provides an electronic device, including a processor and a communication interface. The processor is configured to: perform point cloud partitioning processing on a target point cloud frame of a to-be-encoded point cloud to obtain a plurality of point cloud slices; perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and perform inter-frame prediction encoding on the target point cloud slice based on the compensated reference point cloud slice. The electronic device embodiment corresponds to the foregoing point cloud encoding method embodiment. The implementation processes and implementations of the foregoing point cloud encoding method embodiment may all be applied to the electronic device embodiment, and the same technical effect can be achieved.

An embodiment of this application further provides an electronic device, including a processor and a communication interface. The processor is configured to: perform performing point cloud partitioning processing on a target point cloud frame of a to-be-decoded point cloud to obtain a plurality of point cloud slices; perform, in a case that it is determined that motion compensation is enabled for a target point cloud slice, motion compensation on a reference point cloud slice corresponding to the target point cloud slice, to obtain a compensated reference point cloud slice, where the target point cloud slice is a point cloud slice among the plurality of point cloud slices; and perform inter-frame prediction decoding on the target point cloud slice based on the compensated reference point cloud slice.

The electronic device embodiment corresponds to the foregoing point cloud decoding method embodiment. The implementation processes and implementations of the foregoing point cloud decoding method embodiment may all be applied to the electronic device embodiment, and the same technical effect can be achieved.

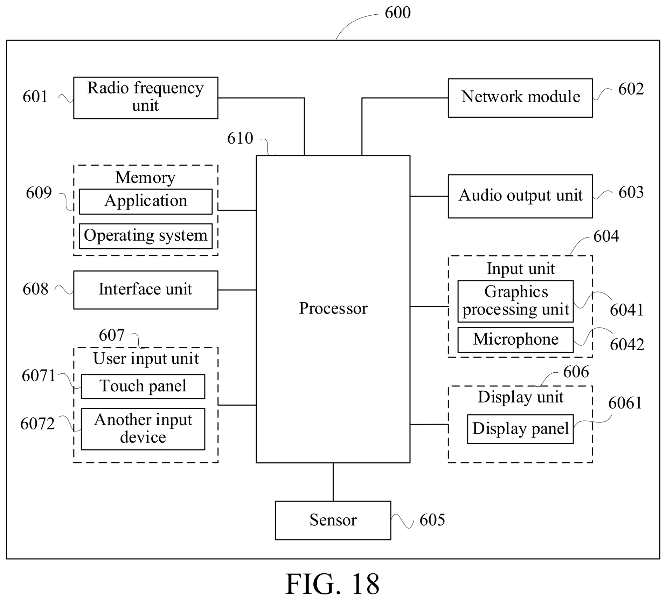

Specifically, the electronic device may be a terminal. FIG. 18 is a schematic diagram of a hardware structure of a terminal for implementing an embodiment of this application.

The terminal 600 includes, but is not limited to, at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (e.g., a battery) that supplies power to the components. The power supply may be logically connected to the processor 610 through a power management system, thereby implementing functions such as management of charging, discharging, and power consumption through the power management system. The terminal structure shown in FIG. 18 constitutes no limitation on the terminal. The terminal may include more or fewer components than those shown in the figure, or some merged components, or different component arrangements. Details are not described herein.

It will be understood that in this embodiment of this application, the input unit 604 may include a graphics processing unit (Graphics Processing Unit, GPU) 6041 and a microphone 6042. The GPU 6041 processes image data of a static picture or a video obtained by an image capture apparatus (e.g., a camera) in a video capture mode or an image capture mode. The display unit 606 may include a display panel 6061. The display panel 6061 may be configured by using a liquid crystal display, an organic light-emitting diode, or the like. The user input unit 607 includes at least one of a touch panel 6071 and another input device 6072. The touch panel 6 071 is also referred to as a touchscreen. The touch panel 6071 may include two parts: a touch detection apparatus and a touch controller. The another input device 6072 may include, but is not limited to, a physical keyboard, a functional key (e.g., a volume control key or a switch key), a track ball, a mouse, and a joystick. Details are not described herein again.

In this embodiment of this application, the radio frequency unit 601 receives downlink data from a network side device and may then transmit the data to the processor 610 for processing. In addition, the radio frequency unit 601 may transmit uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program or instruction and various data. The memory 609 may mainly include a first storage region storing the program or instruction and a second storage region storing the data. The first storage region may store an operating system, an application or instruction required by at least one function (e.g., a sound playback function and an image display function), and the like. Besides, the memory 609 may include a volatile memory or a non-volatile memory. Alternatively, the memory 609 may include both the volatile memory and the non-volatile memory. The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes, but is not limited to, these memories and any other memory of a suitable type.

The processor 610 may include one or more processing units. Optionally, the processor 610 integrates an application processor and a modem processor. The application processor mainly processes operations involving an operating system, a user interface, an application, and the like. The modem processor mainly processes a wireless communication signal, and is, for example, a baseband processor. It may be understood that the foregoing modem may not be integrated into the processor 610.

In a case that the terminal is an encoder-side device:

The processor 610 is configured to:

perform point cloud partitioning processing on a target point cloud frame of a to-be-encoded point cloud to obtain a plurality of point cloud slices;

perform, in a case that it is determined that a target point cloud slice satisfies a first motion compensation condition, motion compensation on a reference point cloud slice corresponding to the target point cloud slice, to obtain a compensated reference point cloud slice, where the target point cloud slice is a point cloud slice among the plurality of point cloud slices; and

perform inter-frame prediction encoding on the target point cloud slice based on the compensated reference point cloud slice.

Optionally, the first motion compensation condition includes a global motion compensation condition. The performing, by the processor 610 in a case that it is determined that a target point cloud slice satisfies a first motion compensation condition, motion compensation on a reference point cloud slice corresponding to the target point cloud slice, to obtain a compensated reference point cloud slice includes:

performing, in a case that it is determined that a target point cloud slice satisfies the global motion compensation condition, global motion compensation on a reference point cloud slice corresponding to the target point cloud slice, to obtain a compensated reference point cloud slice.

Optionally, the processor 610 is further configured to:

encode first indication information, where the first indication information is used for indicating whether global motion compensation is enabled for the target point cloud slice, and a bitstream corresponding to the to-be-encoded point cloud includes an encoding result of the first indication information.

In a case that global motion compensation is performed on a reference point cloud slice corresponding to the target point cloud slice, the first indication information indicates that global motion compensation is enabled for the target point cloud slice.

Optionally, the encoding, by the processor 610, first indication information includes:

encoding second indication information, where the second indication information is used for indicating whether global motion compensation is allowed to be performed on the target point cloud frame, and the bitstream further includes an encoding result of the second indication information; and

encoding the first indication information in a case that the second indication information indicates that global motion compensation is allowed to be performed on the target point cloud frame.

Optionally, the encoding, by the processor 610, first indication information further includes:

encoding third indication information, where the third indication information is used for indicating whether inter-frame prediction is allowed to be performed on the target point cloud slice, and the bitstream further includes an encoding result of the third indication information.

The encoding, by the processor 610, the first indication information in a case that the second indication information indicates that global motion compensation is allowed to be performed on the target point cloud frame includes: encoding the first indication information in a case that the second indication information indicates that global motion compensation is allowed to be performed on the target point cloud frame and the third indication information indicates that inter-frame prediction is allowed to be performed on the target point cloud slice.

Optionally, the encoding, by the processor 610, second indication information includes:

encoding fourth indication information, where the fourth indication information is used for indicating whether inter-frame prediction is allowed to be performed on the target point cloud frame, and the bitstream further includes an encoding result of the fourth indication information;

encoding fifth indication information, where the fifth indication information is used for indicating whether global motion compensation is allowed to be performed on the to-be-encoded point cloud, and the bitstream further includes an encoding result of the fifth indication information; and

encoding the second indication information in a case that the fourth indication information indicates that inter-frame prediction is allowed to be performed on the target point cloud frame and the fifth indication information indicates that global motion compensation is allowed to be performed on the to-be-encoded point cloud.

Optionally, the bitstream further includes an encoding result of sixth indication information. The sixth indication information is used for indicating whether inter-frame prediction is allowed to be performed on the to-be-encoded point cloud.

The encoding, by the processor 610, fourth indication information includes: encoding fourth indication information in a case that the sixth indication information indicates that inter-frame prediction is allowed to be performed on the to-be-encoded point cloud.

Alternatively,

The encoding, by the processor 610, fifth indication information includes: encoding fifth indication information in a case that the sixth indication information indicates that inter-frame prediction is allowed to be performed on the to-be-encoded point cloud.

Optionally, the bitstream further includes an encoding result of fourth indication information. The fourth indication information is used for indicating whether inter-frame prediction is allowed to be performed on the target point cloud frame. The encoding, by the processor 610, third indication information includes:

encoding third indication information in a case that the fourth indication information indicates that inter-frame prediction is allowed to be performed on the target point cloud frame.

Optionally, the processor 610 is further configured to:

perform global motion compensation on a reference point cloud frame corresponding to the target point cloud frame in a case that it is determined that the target point cloud frame satisfies a second motion compensation condition, to obtain a compensated reference point cloud frame; and

determine a reference point cloud slice corresponding to the target point cloud slice based on the compensated reference point cloud frame.

Optionally, the encoding, by the processor 610, first indication information includes:

encoding seventh indication information, where the seventh indication information is used for indicating whether inter-frame prediction is allowed to be performed on the target point cloud frame, and the bitstream further includes an encoding result of the seventh indication information; and

encoding the first indication information in a case that the seventh indication information indicates that inter-frame prediction is allowed to be performed on the target point cloud frame.

Optionally, the encoding, by the processor 610, first indication information further includes:

encoding eighth indication information, where the eighth indication information is used for indicating whether global motion compensation is allowed to be performed on the to-be-encoded point cloud, and the bitstream further includes an encoding result of the eighth indication information.

The encoding, by the processor 610, the first indication information in a case that the seventh indication information indicates that inter-frame prediction is allowed to be performed on the target point cloud frame includes: encoding the first indication information in a case that the eighth indication information indicates that global motion compensation is allowed to be performed on the to-be-encoded point cloud and the seventh indication information indicates that inter-frame prediction is allowed to be performed on the target point cloud frame.

Optionally, the processor 610 is further configured to:

encode ninth indication information, where the ninth indication information is used for indicating whether global motion compensation is enabled for the target point cloud frame.

In a case that global motion compensation is performed on a reference point cloud frame corresponding to the target point cloud frame, the ninth indication information indicates that global motion compensation is enabled for the target point cloud frame.

Optionally, the bitstream further includes an encoding result of seventh indication information and an encoding result of eighth indication information. The seventh indication information is used for indicating whether to perform interframe prediction on the target point cloud frame. The eighth indication information is used for indicating whether to allow to perform global motion compensation on the to-be-encoded point cloud.

The encoding, by the processor 610, ninth indication information includes:

encoding ninth indication information in a case that the seventh indication information indicates that inter-frame prediction is performed on the target point cloud frame and the eighth indication information indicates that global motion compensation is allowed to be performed on the to-be-encoded point cloud.

Optionally, the performing, by the processor 610, global motion compensation on a reference point cloud frame corresponding to the target point cloud frame, to obtain a compensated reference point cloud frame includes:

determining a global motion compensation matrix corresponding to the target point cloud frame; and
performing, based on the global motion compensation matrix, global motion compensation on a reference point cloud frame corresponding to the target point cloud frame, to obtain a compensated reference point cloud frame.

The bitstream further includes an encoding result of tenth indication information. The tenth indication information is used for indicating the global motion compensation matrix.

In a case that the terminal is a decoder-side device:

Point cloud partitioning processing is performed on a target point cloud frame of a to-be-decoded point cloud to obtain a plurality of point cloud slices.

In a case that it is determined that motion compensation is enabled for a target point cloud slice, motion compensation is performed on a reference point cloud slice corresponding to the target point cloud slice, to obtain a compensated reference point cloud slice, where the target point cloud slice is a point cloud slice among the plurality of point cloud slices.

Inter-frame prediction decoding is performed on the target point cloud slice based on the compensated reference point cloud slice.

Optionally, the performing, by the processor 610 in a case that it is determined that motion compensation is enabled for a target point cloud slice, motion compensation on a reference point cloud slice corresponding to the target point cloud slice, to obtain a compensated reference point cloud slice includes:

performing, in a case that it is determined that global motion compensation is enabled for the target point cloud slice, global motion compensation on a reference point cloud slice corresponding to the target point cloud slice, to obtain a compensated reference point cloud slice.

Optionally, the processor 610 is further configured to:

decode first indication information in a bitstream, where the first indication information is used for indicating whether global motion compensation is enabled for the target point cloud slice; and
determine, based on the first indication information, whether global motion compensation is enabled for the target point cloud slice.

Optionally, the decoding, by the processor 610, first indication information in a bitstream includes:

decoding second indication information in the bitstream, where the second indication information is used for indicating whether global motion compensation is allowed to be performed on the target point cloud frame; and
decoding first indication information in the bitstream in a case that the second indication information indicates that global motion compensation is allowed to be performed on the target point cloud frame.

Optionally, the decoding, by the processor 610, first indication information in a bitstream further includes:

decoding third indication information in the bitstream, where the third indication information is used for indicating whether inter-frame prediction is allowed to be performed on the target point cloud slice.

The decoding, by the processor 610, first indication information in the bitstream in a case that the second indication information indicates that global motion compensation is allowed to be performed on the target point cloud frame includes:

decoding first indication information in the bitstream in a case that the second indication information indicates that global motion compensation is allowed to be performed on the target point cloud frame and the third indication information indicates that inter-frame prediction is allowed to be performed on the target point cloud slice.

Optionally, the decoding, by the processor 610, second indication information in the bitstream includes:

decoding fourth indication information in the bitstream, where the fourth indication information is used for indicating whether inter-frame prediction is allowed to be performed on the target point cloud frame;

decoding fifth indication information in the bitstream, where the fifth indication information is used for indicating whether global motion compensation is allowed to be performed on the to-be-decoded point cloud; and

decoding second indication information in the bitstream in a case that the fourth indication information indicates that inter-frame prediction is allowed to be performed on the target point cloud frame and the fifth indication information indicates that global motion compensation is allowed to be performed on the to-be-decoded point cloud.

Optionally, the decoding, by the processor 610, fourth indication information in the bitstream includes: decoding fourth indication information in the bitstream in a case that sixth indication information in the bitstream indicates that inter-frame prediction is allowed to be performed on the to-be-decoded point cloud.

Alternatively,

The decoding, by the processor 610, fifth indication information in the bitstream includes: decoding fifth indication information in the bitstream in a case that sixth indication information in the bitstream indicates that inter-frame prediction is allowed to be performed on the to-be-decoded point cloud.

The sixth indication information is used for indicating whether inter-frame prediction is allowed to be performed on the to-be-decoded point cloud.

Optionally, the decoding, by the processor 610, third indication information in the bitstream includes:

decoding third indication information in the bitstream in a case that fourth indication information in the bitstream indicates that inter-frame prediction is allowed to be performed on the target point cloud frame, where the fourth indication information is used for indicating whether inter-frame prediction is allowed to be performed on the target point cloud frame.

Optionally, before the performing, by the processor 610 in a case that it is determined that motion compensation is enabled for a target point cloud slice, motion compensation on a reference point cloud slice corresponding to the target point cloud slice, the method further includes:

performing global motion compensation on a reference point cloud frame corresponding to the target point cloud frame in a case that it is determined that global motion compensation is enabled for the target point cloud frame, to obtain a compensated reference point cloud frame; and

determining a reference point cloud slice corresponding to the target point cloud slice based on the compensated reference point cloud frame.

Optionally, the decoding, by the processor 610, first indication information in a bitstream includes:

decoding seventh indication information in the bitstream, where the seventh indication information is used for indicating whether inter-frame prediction is allowed to be performed on the target point cloud frame; and

decoding first indication information in the bitstream in a case that the seventh indication information indicates that inter-frame prediction is allowed to be performed on the target point cloud frame.

Optionally, the decoding, by the processor 610, first indication information in a bitstream further includes:

decoding eighth indication information in the bitstream, where the eighth indication information is used for indicating whether global motion compensation is allowed to be performed on the to-be-decoded point cloud.

The decoding, by the processor 610, first indication information in the bitstream in a case that the seventh indication information indicates that inter-frame prediction is allowed to be performed on the target point cloud frame includes:

decoding first indication information in the bitstream in a case that the eighth indication information indicates that global motion compensation is allowed to be performed on the to-be-decoded point cloud and the seventh indication information indicates that inter-frame prediction is allowed to be performed on the target point cloud frame.

Optionally, before the performing global motion compensation on a reference point cloud frame corresponding to the target point cloud frame, the method further includes:

decoding ninth indication information in the bitstream, where the ninth indication information is used for indicating whether global motion compensation is enabled for the target point cloud frame; and

determining, based on the ninth indication information, whether global motion compensation is enabled for the target point cloud frame.

Optionally, the decoding, by the processor 610, ninth indication information in the bitstream includes: decoding ninth indication information in the bitstream in a case that seventh indication information in the bitstream indicates that inter-frame prediction is performed on the target point cloud frame and eighth indication information in the bitstream indicates that global motion compensation is allowed to be performed on the to-be-decoded point cloud.

The seventh indication information is used for indicating whether to perform inter-frame prediction on the target point cloud frame. The eighth indication information is used for indicating whether to allow to perform global motion compensation on the to-be-decoded point cloud.

Optionally, the performing, by the processor 610, global motion compensation on a reference point cloud frame corresponding to the target point cloud frame, to obtain a compensated reference point cloud frame includes:

decoding tenth indication information in the bitstream, to obtain a global motion compensation matrix corresponding to the target point cloud frame, where the tenth indication information is used for indicating the global motion compensation matrix; and

performing, based on the global motion compensation matrix, global motion compensation on a reference point cloud frame corresponding to the target point cloud frame, to obtain a compensated reference point cloud frame.

Specifically, the terminal according to this embodiment of this application further includes: an instruction or program stored in the memory 609 and executable on the processor 610. The processor 610 invokes the instruction or program in the memory 609 to perform the method performed by each module shown in FIG. 15 or FIG. 16, and the same technical effect is achieved. To avoid repetition, details are not described herein again.

An embodiment of this application further provides a readable storage medium. The readable storage medium has a program or instruction stored therein. The program or instruction, when executed by a processor, implements the processes of the foregoing point cloud encoding method embodiment. Alternatively, the program or instruction, when executed by a processor, implements the processes of the foregoing point cloud decoding method embodiment, and the same technical effects can be achieved. To avoid repetition, details are not described herein again.

The processor is a processor of the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application additionally provides a chip. The chip includes a processor and a communication interface. The communication interface is coupled to the processor. The processor is configured to execute a program or instruction, to implement the processes of the foregoing point cloud encoding method embodiment or implement the processes of the foregoing point cloud decoding method embodiment, and the same technical effects can be achieved. To avoid repetition, details are not described herein again.

It should be understood that the chip mentioned in this embodiment of this application may alternatively be referred to as a system level chip, a system chip, a chip system, a system on chip, or the like.

It should be noted that in this specification, the term "include", "comprise", or any other variants thereof are intended to encompass in a non-exclusive manner, so that a process, method, object, or apparatus including a series of elements not only includes those elements, but also includes other elements that are not explicitly listed, or elements that are inherent to such a process, method, object, or apparatus. Without more limitations, an element defined by a sentence "including a ..." does not exclude a case that there are still other same elements in the process, method, object, or apparatus including the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may further be added, omitted, or combined. In addition, features described with reference to some examples may be combined in other examples.

According to the descriptions in the foregoing implementations, a person skilled in the art may clearly learn that the method according to the foregoing embodiment may be implemented by relying on software and a commodity hardware platform, which is preferred in many cases, or by using hardware. Based on such an understanding, the technical solutions of this application essentially, or a part contributing to the prior art, may be presented in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations, and the foregoing specific implementations are only exemplary and not limitative. A person of ordinary skill in the art may make various variations under the teaching of this application without departing from the spirit of this application and the protection scope of the claims, and such variations shall all fall within the protection scope of this application.

**Claims**

1. A point cloud encoding method, performed by an encoder side, the method comprising:

   performing point cloud partitioning processing on a target point cloud frame of a to-be-encoded point cloud to obtain a plurality of point cloud slices;
   performing, in a case that it is determined that a target point cloud slice satisfies a first motion compensation condition, motion compensation on a reference point cloud slice corresponding to the target point cloud slice, to obtain a compensated reference point cloud slice, wherein the target point cloud slice is a point cloud slice among the plurality of point cloud slices; and
   performing inter-frame prediction encoding on the target point cloud slice based on the compensated reference point cloud slice.

2. The method according to claim 1, wherein the first motion compensation condition comprises a global motion compensation condition, and the performing, in a case that it is determined that a target point cloud slice satisfies a first motion compensation condition, motion compensation on a reference point cloud slice corresponding to the target point cloud slice, to obtain a compensated reference point cloud slice comprises:
   performing, in a case that it is determined that a target point cloud slice satisfies the global motion compensation condition, global motion compensation on a reference point cloud slice corresponding to the target point cloud slice, to obtain a compensated reference point cloud slice.

3. The method according to claim 2, further comprising:

   encoding first indication information, wherein the first indication information is used for indicating whether global motion compensation is enabled for the target point cloud slice, and a bitstream corresponding to the to-be-encoded point cloud comprises an encoding result of the first indication information,
   wherein in a case that global motion compensation is performed on a reference point cloud slice corresponding to the target point cloud slice, the first indication information indicates that global motion compensation is enabled for the target point cloud slice.

4. The method according to claim 3, wherein the encoding first indication information comprises:

   encoding second indication information, wherein the second indication information is used for indicating whether global motion compensation is allowed to be performed on the target point cloud frame, and the bitstream further comprises an encoding result of the second indication information; and
   encoding the first indication information in a case that the second indication information indicates that global motion compensation is allowed to be performed on the target point cloud frame.

5. The method according to claim 4, wherein the encoding first indication information further comprises:

   encoding third indication information, wherein the third indication information is used for indicating whether inter-frame prediction is allowed to be performed on the target point cloud slice, and the bitstream further comprises an encoding result of the third indication information;
   the encoding the first indication information in a case that the second indication information indicates that global motion compensation is allowed to be performed on the target point cloud frame comprises:
   encoding the first indication information in a case that the second indication information indicates that global motion compensation is allowed to be performed on the target point cloud frame and the third indication information indicates that inter-frame prediction is allowed to be performed on the target point cloud slice.

6. The method according to claim 4 or 5, wherein the encoding second indication information comprises:

   encoding fourth indication information, wherein the fourth indication information is used for indicating whether inter-frame prediction is allowed to be performed on the target point cloud frame, and the bitstream further comprises an encoding result of the fourth indication information;
   encoding fifth indication information, wherein the fifth indication information is used for indicating whether global motion compensation is allowed to be performed on the to-be-encoded point cloud, and the bitstream further comprises an encoding result of the fifth indication information; and

encoding the second indication information in a case that the fourth indication information indicates that inter-frame prediction is allowed to be performed on the target point cloud frame and the fifth indication information indicates that global motion compensation is allowed to be performed on the to-be-encoded point cloud.

7. The method according to claim 6, wherein the bitstream further comprises an encoding result of sixth indication information, and the sixth indication information is used for indicating whether inter-frame prediction is allowed to be performed on the to-be-encoded point cloud;

the encoding fourth indication information comprises: encoding fourth indication information in a case that the sixth indication information indicates that inter-frame prediction is allowed to be performed on the to-be-encoded point cloud;

or,

the encoding fifth indication information comprises: encoding fifth indication information in a case that the sixth indication information indicates that inter-frame prediction is allowed to be performed on the to-be-encoded point cloud.

8. The method according to claim 5, wherein the bitstream further comprises an encoding result of fourth indication information, the fourth indication information is used for indicating whether inter-frame prediction is allowed to be performed on the target point cloud frame, and the encoding third indication information comprises:

encoding third indication information in a case that the fourth indication information indicates that inter-frame prediction is allowed to be performed on the target point cloud frame.

9. The method according to claim 3, wherein before the performing, in a case that it is determined that a target point cloud slice satisfies a first motion compensation condition, motion compensation on a reference point cloud slice corresponding to the target point cloud slice, the method further comprises:

performing global motion compensation on a reference point cloud frame corresponding to the target point cloud frame in a case that it is determined that the target point cloud frame satisfies a second motion compensation condition, to obtain a compensated reference point cloud frame; and

determining a reference point cloud slice corresponding to the target point cloud slice based on the compensated reference point cloud frame.

10. The method according to claim 9, wherein the encoding first indication information comprises:

encoding seventh indication information, wherein the seventh indication information is used for indicating whether inter-frame prediction is allowed to be performed on the target point cloud frame, and the bitstream further comprises an encoding result of the seventh indication information; and

encoding the first indication information in a case that the seventh indication information indicates that inter-frame prediction is allowed to be performed on the target point cloud frame.

11. The method according to claim 10, wherein the encoding first indication information further comprises:

encoding eighth indication information, wherein the eighth indication information is used for indicating whether global motion compensation is allowed to be performed on the to-be-encoded point cloud, and the bitstream further comprises an encoding result of the eighth indication information;

the encoding the first indication information in a case that the seventh indication information indicates that inter-frame prediction is allowed to be performed on the target point cloud frame comprises:

encoding the first indication information in a case that the eighth indication information indicates that global motion compensation is allowed to be performed on the to-be-encoded point cloud and the seventh indication information indicates that inter-frame prediction is allowed to be performed on the target point cloud frame.

12. The method according to claim 9, further comprising:

encoding ninth indication information, wherein the ninth indication information is used for indicating whether global motion compensation is enabled for the target point cloud frame,

wherein in a case that global motion compensation is performed on a reference point cloud frame corresponding to the target point cloud frame, the ninth indication information indicates that global motion compensation is enabled for the target point cloud frame.

13. The method according to claim 12, wherein the bitstream further comprises an encoding result of seventh indication information and an encoding result of eighth indication information, the seventh indication information is used for indicating whether to perform inter-frame prediction on the target point cloud frame, and the eighth indication information is used for indicating whether to allow to perform global motion compensation on the to-be-encoded point cloud;

the encoding ninth indication information comprises:

encoding ninth indication information in a case that the seventh indication information indicates that inter-frame prediction is performed on the target point cloud frame and the eighth indication information indicates that global motion compensation is allowed to be performed on the to-be-encoded point cloud.

14. The method according to any one of claims 9 to 13, wherein the performing global motion compensation on a reference point cloud frame corresponding to the target point cloud frame, to obtain a compensated reference point cloud frame comprises:

determining a global motion compensation matrix corresponding to the target point cloud frame; and
performing, based on the global motion compensation matrix, global motion compensation on a reference point cloud frame corresponding to the target point cloud frame, to obtain a compensated reference point cloud frame, wherein the bitstream further comprises an encoding result of tenth indication information, and the tenth indication information is used for indicating the global motion compensation matrix.

15. A point cloud decoding method, performed by a decoder side, the method comprising:

performing point cloud partitioning processing on a target point cloud frame of a to-be-decoded point cloud to obtain a plurality of point cloud slices;
performing, in a case that it is determined that motion compensation is enabled for a target point cloud slice, motion compensation on a reference point cloud slice corresponding to the target point cloud slice, to obtain a compensated reference point cloud slice, wherein the target point cloud slice is a point cloud slice among the plurality of point cloud slices; and
performing inter-frame prediction decoding on the target point cloud slice based on the compensated reference point cloud slice.

16. The method according to claim 15, wherein the performing, in a case that it is determined that motion compensation is enabled for a target point cloud slice, motion compensation on a reference point cloud slice corresponding to the target point cloud slice, to obtain a compensated reference point cloud slice comprises:

performing, in a case that it is determined that global motion compensation is enabled for the target point cloud slice, global motion compensation on a reference point cloud slice corresponding to the target point cloud slice, to obtain a compensated reference point cloud slice.

17. The method according to claim 16, wherein before the performing, in a case that it is determined that motion compensation is enabled for a target point cloud slice, motion compensation on a reference point cloud slice corresponding to the target point cloud slice, the method further comprises:

decoding first indication information in a bitstream, wherein the first indication information is used for indicating whether global motion compensation is enabled for the target point cloud slice; and
determining, based on the first indication information, whether global motion compensation is enabled for the target point cloud slice.

18. The method according to claim 17, wherein the decoding first indication information in a bitstream comprises:

decoding second indication information in the bitstream, wherein the second indication information is used for indicating whether global motion compensation is allowed to be performed on the target point cloud frame; and
decoding first indication information in the bitstream in a case that the second indication information indicates that global motion compensation is allowed to be performed on the target point cloud frame.

19. The method according to claim 18, wherein the decoding first indication information in a bitstream further comprises:

decoding third indication information in the bitstream, wherein the third indication information is used for indicating whether inter-frame prediction is allowed to be performed on the target point cloud slice;

the decoding first indication information in the bitstream in a case that the second indication information indicates that global motion compensation is allowed to be performed on the target point cloud frame comprises:

decoding first indication information in the bitstream in a case that the second indication information indicates that global motion compensation is allowed to be performed on the target point cloud frame and the third indication information indicates that inter-frame prediction is allowed to be performed on the target point cloud slice.

20. The method according to claim 18 or 19, wherein the decoding second indication information in the bitstream comprises:

decoding fourth indication information in the bitstream, wherein the fourth indication information is used for indicating whether inter-frame prediction is allowed to be performed on the target point cloud frame;

decoding fifth indication information in the bitstream, wherein the fifth indication information is used for indicating whether global motion compensation is allowed to be performed on the to-be-decoded point cloud; and

decoding second indication information in the bitstream in a case that the fourth indication information indicates that inter-frame prediction is allowed to be performed on the target point cloud frame and the fifth indication information indicates that global motion compensation is allowed to be performed on the to-be-decoded point cloud.

21. The method according to claim 20, wherein the decoding fourth indication information in the bitstream comprises: decoding fourth indication information in the bitstream in a case that sixth indication information in the bitstream indicates that inter-frame prediction is allowed to be performed on the to-be-decoded point cloud;

or,

the decoding fifth indication information in the bitstream comprises: decoding fifth indication information in the bitstream in a case that sixth indication information in the bitstream indicates that inter-frame prediction is allowed to be performed on the to-be-decoded point cloud,

wherein the sixth indication information is used for indicating whether inter-frame prediction is allowed to be performed on the to-be-decoded point cloud.

22. The method according to claim 19, wherein the decoding third indication information in the bitstream comprises: decoding third indication information in the bitstream in a case that fourth indication information in the bitstream indicates that inter-frame prediction is allowed to be performed on the target point cloud frame, wherein the fourth indication information is used for indicating whether inter-frame prediction is allowed to be performed on the target point cloud frame.

23. The method according to claim 22, wherein before the performing, in a case that it is determined that motion compensation is enabled for a target point cloud slice, motion compensation on a reference point cloud slice corresponding to the target point cloud slice, the method further comprises:

performing global motion compensation on a reference point cloud frame corresponding to the target point cloud frame in a case that it is determined that global motion compensation is enabled for the target point cloud frame, to obtain a compensated reference point cloud frame; and

determining a reference point cloud slice corresponding to the target point cloud slice based on the compensated reference point cloud frame.

24. The method according to claim 23, wherein the decoding first indication information in a bitstream comprises:

decoding seventh indication information in the bitstream, wherein the seventh indication information is used for indicating whether inter-frame prediction is allowed to be performed on the target point cloud frame;

decoding first indication information in the bitstream in a case that the seventh indication information indicates that inter-frame prediction is allowed to be performed on the target point cloud frame.

25. The method according to claim 24, wherein the decoding first indication information in a bitstream further comprises:

decoding eighth indication information in the bitstream, wherein the eighth indication information is used for indicating whether global motion compensation is allowed to be performed on the to-be-decoded point cloud;

the decoding first indication information in the bitstream in a case that the seventh indication information indicates that inter-frame prediction is allowed to be performed on the target point cloud frame comprises:
decoding first indication information in the bitstream in a case that the eighth indication information indicates that global motion compensation is allowed to be performed on the to-be-decoded point cloud and the seventh indication information indicates that inter-frame prediction is allowed to be performed on the target point cloud frame.

26. The method according to claim 23, wherein before the performing global motion compensation on a reference point cloud frame corresponding to the target point cloud frame, the method further comprises:

decoding ninth indication information in the bitstream, wherein the ninth indication information is used for indicating whether global motion compensation is enabled for the target point cloud frame; and
determining, based on the ninth indication information, whether global motion compensation is enabled for the target point cloud frame.

27. The method according to claim 26, wherein the decoding ninth indication information in the bitstream comprises:

decoding ninth indication information in the bitstream in a case that seventh indication information in the bitstream indicates that inter-frame prediction is performed on the target point cloud frame and eighth indication information in the bitstream indicates that global motion compensation is allowed to be performed on the to-be-decoded point cloud,
wherein the seventh indication information is used for indicating whether to perform inter-frame prediction on the target point cloud frame, and the eighth indication information is used for indicating whether to allow to perform global motion compensation on the to-be-decoded point cloud.

28. The method according to any one of claims 23 to 27, wherein the performing global motion compensation on a reference point cloud frame corresponding to the target point cloud frame, to obtain a compensated reference point cloud frame comprises:

decoding tenth indication information in the bitstream, to obtain a global motion compensation matrix corresponding to the target point cloud frame, wherein the tenth indication information is used for indicating the global motion compensation matrix; and
performing, based on the global motion compensation matrix, global motion compensation on a reference point cloud frame corresponding to the target point cloud frame, to obtain a compensated reference point cloud frame.

29. A point cloud encoding apparatus, comprising:

a partitioning module, configured to perform point cloud partitioning processing on a target point cloud frame of a to-be-encoded point cloud to obtain a plurality of point cloud slices;
a first compensation module, configured to perform, in a case that it is determined that a target point cloud slice satisfies a first motion compensation condition, motion compensation on a reference point cloud slice corresponding to the target point cloud slice, to obtain a compensated reference point cloud slice, wherein the target point cloud slice is a point cloud slice among the plurality of point cloud slices; and
a first encoding module, configured to perform inter-frame prediction encoding on the target point cloud slice based on the compensated reference point cloud slice.

30. A point cloud decoding apparatus, comprising:

a partitioning module, configured to perform point cloud partitioning processing on a target point cloud frame of a to-be-decoded point cloud to obtain a plurality of point cloud slices;
a first compensation module, configured to perform, in a case that it is determined that motion compensation is enabled for a target point cloud slice, motion compensation on a reference point cloud slice corresponding to the target point cloud slice, to obtain a compensated reference point cloud slice, wherein the target point cloud slice is a point cloud slice among the plurality of point cloud slices; and
a first decoding module, configured to perform inter-frame prediction decoding on the target point cloud slice based on the compensated reference point cloud slice.

31. An electronic device, comprising a processor, a memory, and a program or instruction stored in the memory and executable on the processor, wherein the program or instruction, when executed by the processor, implements the steps of the point cloud encoding method according to any one of claims 1 to 14, or the program or instruction, when executed by the processor, implements the steps of the point cloud decoding method according to any one of claims 15 to 28.

32. A chip, comprising a processor and a communication interface, wherein the communication interface is coupled to the processor, and the processor is configured to execute a program or instruction, to implement the steps of the point cloud encoding method according to any one of claims 1 to 14, or to implement the steps of the point cloud decoding method according to any one of claims 15 to 28.

33. A readable storage medium, the readable storage medium having a program or instruction stored therein, wherein the program or instruction, when executed by a processor, implements the steps of the point cloud encoding method according to any one of claims 1 to 14, or the program or instruction, when executed by the processor, implements the steps of the point cloud decoding method according to any one of claims 15 to 28.

FIG. 1

FIG. 2

## FIG. 3

Sub-node i in reference frame          Prediction          Sub-node i in current frame

## FIG. 4

Current node occupancy
$b_0 \ldots b_7$

Prediction node occupancy
$bP_0 \ldots bP_7$

Is a prediction node occupied? bP==0?

Yes

No

Is prediction sub-node i occupied? $bP_i$==0?

Yes

No

Is the quantity of points in prediction sub-node i greater than a threshold? $NPred_i$ >th?

Yes

No

$b_i$

$b_i$

$b_i$

$b_i$

No inter-frame prediction information
IsInter==0

Inter-frame prediction for sub-node i is 0
$Pred_i$==0

Inter-frame prediction for sub-node i is 1: $Pred_i$==1, with strong prediction: $PredL_i$==1 satisfied

Inter-frame prediction for sub-node i is 1: $Pred_i$==1, without strong prediction: $PredL_i$==0 satisfied

Combination and reduction of intra-frame and inter-frame context information

Arithmetic encoding

Bitstream

FIG. 5

Start

if(gps.interPredictionEnabledFlag
&&randomAccessPeriod)

No

Yes

gbh.interPredictionEnabledFlag=true
(Yes)

gbh.interPredictionEnabledFlag=false
(No)

if(gbh.interPredictionEnabledFlag)

No

Yes

No

if(gps.globalMotionEnabled)

Yes

Perform global motion compensation
on a reference frame

Generate inter-frame prediction
information by using the reference
frame to encode a current frame

Skip using inter-frame prediction
information to encode a current frame

FIG. 6

FIG. 7

FIG. 8

FIG. 9

20

10

motion_block_size

motion_window_size

y

x

Search window in
reference frame

10

Search window in
current frame

## FIG. 10

x
layer:
LPU

☐ Without point occupancy

■ With point occupancy

x+1 layer

Null nodes are
not processed

x+2 layer:
minPU
(Minimum
PU)

Null nodes
are not
processed

Null nodes
are not
processed

## FIG. 11

FIFO

(Node size)
Nodesize[0]==
LPUlog2?

0

1

Is the quantity
of points of $LPU_{ref}$ greater
than 50?

1

Dec_split=1

Dec_split==1?

0

1

(Minimum PU)
minPU?

1

0

Split_flag is
inferred as 0

Decode
Split_flag

Decoder
MV

0

Split_flag==1?

1

isCompensated=1
Dec_split=0

Uncompensated
inter-frame
context (contex)

isCompensated==1?

1

Combine with
other context
(contex)

Compensated inter-
frame context
(contex)

Decode an
occupancy
(occupacy)

FIG. 12

Start

Perform point cloud partitioning processing on a target point cloud frame of a to-be-encoded point cloud to obtain a plurality of point cloud slices ⎯ 101

Perform, in a case that it is determined that a target point cloud slice satisfies a first motion compensation condition, motion compensation on a reference point cloud slice corresponding to the target point cloud slice, to obtain a compensated reference point cloud slice ⎯ 102

Perform inter-frame prediction encoding on the target point cloud slice based on the compensated reference point cloud slice ⎯ 103

End

## FIG. 13

Start

Perform point cloud partitioning processing on a target point cloud frame of a to-be-decoded point cloud to obtain a plurality of point cloud slices ⎯ 201

Perform, in a case that it is determined that motion compensation is enabled for the target point cloud slice, motion compensation on a reference point cloud slice corresponding to the target point cloud slice, to obtain a compensated reference point cloud slice ⎯ 202

Perform inter-frame prediction decoding on the target point cloud slice based on the compensated reference point cloud slice ⎯ 203

End

## FIG. 14

300

Point cloud encoding
apparatus

Partitioning
module — 301

First compensation
module — 302

First encoding
module — 303

FIG. 15

400

Point cloud decoding
apparatus

Partitioning
module — 401

First compensation
module — 402

First decoding
module — 403

FIG. 16

500

Electronic device

501 — Processor ⟺ Memory — 502

FIG. 17

FIG. 18

## INTERNATIONAL SEARCH REPORT

| International application No. |
| --- |
| **PCT/CN2024/103742** |

**A. CLASSIFICATION OF SUBJECT MATTER**

H04N19/597(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; ENTXT; ENTXTC; JVET; CNKI; IEEE: 点云, 编码, 切片, 全局, 运动, 补偿, 参考, 帧间, 预测, 矩阵, point, cloud, coding, slice, global, motion, compensation, reference, inter, predict, matrix

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022146827 A2 (QUALCOMM INC.) 07 July 2022 (2022-07-07) description, paragraphs [0140]-[0224] | 1-33 |
| A | CN 112771850 A (HUAWEI TECHNOLOGIES CO., LTD.) 07 May 2021 (2021-05-07) entire document | 1-33 |
| A | CN 114829971 A (HUAWEI TECHNOLOGIES CO., LTD.) 29 July 2022 (2022-07-29) entire document | 1-33 |
| A | CN 114424247 A (TENCENT AMERICA LLC) 29 April 2022 (2022-04-29) entire document | 1-33 |
| A | WO 2023282581 A1 (LG ELECTRONICS, INC.) 12 January 2023 (2023-01-12) entire document | 1-33 |
| A | WO 2023287243 A1 (LG ELECTRONICS, INC.) 19 January 2023 (2023-01-19) entire document | 1-33 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **09 September 2024** | **24 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 746 413 A1

International application No.

**PCT/CN2024/103742**

| Patent document cited in search report | | | Publication date (day/month/year) | Patent family member(s) | | | Publication date (day/month/year) |
|---|---|---|---|---|---|---|---|
| WO | 2022146827 | A2 | 07 July 2022 | US | 2022210466 | A1 | 30 June 2022 |
| | | | | CA | 3198097 | A1 | 07 July 2022 |
| | | | | TW | 202232957 | A | 16 August 2022 |
| | | | | WO | 2022146827 | A3 | 20 October 2022 |
| | | | | IN | 202347027463 | A | 05 May 2023 |
| | | | | AU | 2021412912 | A1 | 18 May 2023 |
| | | | | MX | 2023007566 | A1 | 11 July 2023 |
| | | | | CN | 116648914 | A | 25 August 2023 |
| | | | | KR | 20230125786 | A | 29 August 2023 |
| | | | | VN | 98032 | A | 25 September 2023 |
| | | | | EP | 4272445 | A2 | 08 November 2023 |
| | | | | BR | 112023012161 | A2 | 28 November 2023 |
| | | | | HK | 40093381 | A0 | 05 January 2024 |
| | | | | AU | 2021412912 | A9 | 08 February 2024 |
| | | | | US | 11949909 | B2 | 02 April 2024 |
| | | | | JP | 2024503972 | A | 30 January 2024 |
| CN | 112771850 | A | 07 May 2021 | MX | 2021003841 | A | 10 December 2021 |
| | | | | KR | 20210069683 | A | 11 June 2021 |
| | | | | KR | 102537087 | B1 | 26 May 2023 |
| | | | | BR | 112021006256 | A2 | 06 July 2021 |
| | | | | JP | 2022502961 | A | 11 January 2022 |
| | | | | JP | 7187688 | B2 | 12 December 2022 |
| | | | | US | 2021217202 | A1 | 15 July 2021 |
| | | | | US | 11688104 | B2 | 27 June 2023 |
| | | | | WO | 2020072579 | A1 | 09 April 2020 |
| | | | | EP | 3850832 | A1 | 21 July 2021 |
| | | | | EP | 3850832 | A4 | 10 November 2021 |
| | | | | IN | 202117016842 | A | 24 September 2021 |
| | | | | VN | 79512 | A | 26 July 2021 |
| | | | | SG | 11202103302 | A1 | 29 April 2021 |
| | | | | CN | 112771850 | B | 24 May 2022 |
| CN | 114829971 | A | 29 July 2022 | WO | 2023028774 | A1 | 09 March 2023 |
| CN | 114424247 | A | 29 April 2022 | JP | 2022550579 | A | 02 December 2022 |
| | | | | JP | 7478816 | B2 | 07 May 2024 |
| | | | | EP | 4010879 | A1 | 15 June 2022 |
| | | | | US | 2021329270 | A1 | 21 October 2021 |
| | | | | US | 11451802 | B2 | 20 September 2022 |
| | | | | KR | 20220035224 | A | 21 March 2022 |
| | | | | WO | 2021211458 | A1 | 21 October 2021 |
| | | | | HK | 40071796 | A0 | 11 November 2022 |
| WO | 2023282581 | A1 | 12 January 2023 | US | 2023045663 | A1 | 09 February 2023 |
| | | | | CN | 117581541 | A | 20 February 2024 |
| | | | | KR | 20240032912 | A | 12 March 2024 |
| | | | | EP | 4362463 | A1 | 01 May 2024 |
| WO | 2023287243 | A1 | 19 January 2023 | CN | 117693939 | A | 12 March 2024 |
| | | | | EP | 4373097 | A1 | 22 May 2024 |

Form PCT/ISA/210 (patent family annex) (July 2022)

**EP 4 746 413 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310853877